# EUROPEAN PATENT APPLICATION

(11) **EP 1 505 528 A1**
(43) Date of publication of application: **09.02.2005**
(21) Application number: 03752900.5
(22) Date of filing: 15.05.2003
(51) Int. Cl.: G06F 17/60

(54) **CONTENT USE MANAGEMENT SYSTEM**

(30) Priority: 15.05.2002 JP 2002139613; 15.05.2002 JP 2002139615
(71) Applicant: MATSUSHITA ELECTRIC INDUSTRIAL CO., LTD., Kadoma-shi, Osaka 571-8501 (JP)
(72) Inventor: OKAMOTO, Ryuichi, Kadoma-shi, Osaka 571-0014 (JP); MIURA, Kouji, Matsubara-shi, Osaka 580-0016 (JP); ONODA, Sen'ichi, Toyonaka-shi, Osaka 560-0003 (JP); NAKAHARA, Tohru, Osaka-shi, Osaka 532-0022 (JP); INOUE, Mitsuhiro, Osaka-shi, Osaka 555-0011 (JP); HIGASHI, Akio B-406 Matsushitadenkihiyoshidaisou, Takatsuki-shi, Osaka 569-1022 (JP)
(74) Representative: Pautex Schneider, Nicole
(86) International application number: PCT/JP2003/006043
(87) International publication number: WO 2003/098512

(57) **Abstract**

A usage right which a user purchases is managed by a right management server (20a). License information which is a part of the usage right is sent from the right management server (20a) to a user terminal (30a). The user terminal (30a) controls usage of content based on this license information.

## Description

### Technical Field

The present invention relates to a content usage management system and the like, and more particularly to a content usage management system and the like for distributing license information, which permits a user who requests content usage to use the content on the user's terminal apparatus under a certain usage rule, from a management apparatus to the terminal apparatus via a communication network.

### Background Art

In recent years, systems for distributing digital works such as music, video and games via the Internet, digital broadcasting or the like have been developed, and some of them are now in a phase for practical use. For distributing these types of contents, methods of usage control for restricting the number of reproductions (playbacks), moving and copying of such contents for distribution have also been under study from a viewpoint of copyright protection.

As disclosed in Japanese Laid-Open Patent Application No. 2000-48076, a conventional digital content distribution system has been modeled so that a user terminal can manage the whole content usage rule for each user by distributing it to the user terminal along with the content.

For example, when a user purchases a right to view a movie "Matrix"® 3 times, the user terminal receives a usage rule indicating that ""Matrix" can be viewed 3 times" along with the content of the movie "Matrix" from a distribution server, and manages the reproduction of the content under this usage rule. After distributing the usage rule to the user terminal, the distribution server is no longer involved in the usage rule for the user.

When the content "Matrix" is viewed, the user terminal performs processing of decrementing by 1 the number of views permitted under the usage rule managed by the user terminal itself every time the content is viewed once, and performs processing of disabling any views at the time when the permitted number of views becomes 0.

As described above, in the conventional digital content distribution system, the user terminal manages the whole content usage rule for each user.

However, in the conventional art, complicated usage rule management is absolutely required on the user terminal when it manages the whole usage rule for each user. Incorporation of such a function into a user terminal can put an enormous load on portable devices such as a mobile phone, consumer electronics and the like.

If the user terminal manages the whole usage rule for a user, it accesses a server apparatus only once when it distributes the usage rule to the user. As a result, the server apparatus can hardly grasp information on whether the user has actually used the content or how often he used it (hereinafter referred to as "usage status"), nor make good use of such information for the future distribution service of contents and usage rule.

In addition, if the user terminal manages the whole usage rule of a content for a user, the user cannot view the content on other terminals than the terminal that manages the usage rule. Therefore, there is a problem that even if the user has a plurality of terminals, the right to view the content purchased by the user cannot be shared by those terminals.

In sum, the conventional systems have problems that not only put a heavy load on the user's terminal apparatus but also cannot meet demand for various types of services for content usage.

The present invention is conceived to solve these problems in the conventional art, and the object of the present invention is to provide a content usage management system and the like capable of reducing the load on the user's terminal apparatus and further satisfying demand for various types of services for content usage.

### Disclosure of Invention

In order to solve the above problems, the content usage management system according to the present invention is a content usage management system comprising: a terminal apparatus for using a content that is a digital work; and a server apparatus for managing usage of the content on the terminal apparatus, wherein the server apparatus includes: a license information storage unit operable to store license information indicating a usage rule of a content for each user who uses the terminal apparatus; a license ticket generation unit operable to generate a license ticket based on a request from the user and send said license ticket to the terminal apparatus, the license ticket being information on a right indicating a part or a whole of the usage rule indicated by the license information associated with the user; and a return information setting unit operable to set return information on the license ticket generated by the license ticket generation unit, the return information indicating whether the license ticket needs to be returned to the server apparatus or not when the right of said license ticket lapses, and the terminal apparatus includes: a usage request unit operable to request the server apparatus for usage of the content according to the user's instruction; a receiving unit operable to receive the license ticket sent from the server apparatus; a content usage control unit operable to control the usage of the content under the usage rule indicated by the received license ticket; and a license ticket return unit operable to attempt to return the license ticket to the server apparatus according to the return information indicated by the received license ticket.

Thanks to this structure, not only the load on the user's terminal apparatus can be reduced, but also demand for various types of services for content usage can be satisfied because the server apparatus is accessed with a higher frequency due to returns of license tickets and requests for license ticket issues.

Note that in the present description, "usage" of a content is used as a term including all the operations for using the content, such as "reproduction", "moving" and "copying" of the content, and "printing" of the content such as an electronic book.

Here, in the content usage management system according to the present invention, it is preferable that the usage request unit requests the server apparatus for the usage of the content by sending an instructed usage amount of the content to the server apparatus, and that the license ticket generation unit generates the license ticket based on the instructed usage amount sent from the usage request unit and sends said license ticket to the terminal apparatus.

In the content usage management system according to the present invention, the instructed usage amount can include a number of usage times of the content, or include cumulative usage time of the content.

In the content usage management system according to the present invention, the usage rule indicated by the license ticket can include an effective period of said license ticket, the effective period being set as a part or a whole of an effective period defined under the usage rule indicated by the license information.

In the content usage management system according to the present invention, the usage request unit may send capability information and the instructed usage amount to the server apparatus, the capability information indicating capability of the terminal apparatus to control the usage of the content, and the license ticket generation unit may generate the license ticket based on the capability information sent from the usage request unit and send said license ticket to the terminal apparatus.

In the content usage management system according to the present invention, the capability information can include information indicating whether the terminal apparatus has a secure clock or not.

In the content usage management system according to the present invention, the capability information may include information indicating whether the terminal apparatus has a unit for writing onto a secure recording medium or not.

In the content usage management system according to the present invention, upon receipt of the capability information from the usage request unit, the license ticket generation unit can include license ticket status information into the license ticket and send said license ticket to the terminal apparatus, the license ticket status information instructing how to handle the license ticket on the terminal apparatus depending on the capability indicated by the capability information.

In the content usage management system according to the present invention, the license ticket status information may include a flag indicating that the license ticket must be consumed immediately without being written onto a recording medium.

Note that the present invention can be realized not only as such a content usage management system and a digital content distribution system as mentioned above, but also as a server apparatus and a terminal apparatus included in these systems, as a content usage management method including steps executed by the characteristic units included in these server apparatus and terminal apparatus, or as a program for causing a computer to execute these steps. It goes without saying that such a program can be distributed via a recording medium such as a CD-ROM or a transmission medium such as the Internet.

### Brief Description of Drawings

Fig. 1 is a block diagram showing an overview of a configuration of a digital content distribution system in a first embodiment of the present invention.
Fig. 2 is a diagram showing a format structure of content data 60 as shown in Fig. 1.
Fig. 3 is a functional block diagram showing a specific structure of a right management server 20a as shown in Fig. 1.
Fig. 4 is a diagram showing a specific structure of a user information database 21 as shown in Fig. 3.
Fig. 5 is a diagram showing a specific structure of a usage right database 22a as shown in Fig. 3.
Fig. 6 is a diagram showing a specific structure of a LT80a as shown in Fig. 1.
Fig. 7 is a diagram showing relationship between a LT effective period limit 2225a of a usage right 222a and a LT effective period 821a set for a LT 80a.
Fig. 8 is a functional block diagram showing a specific structure of a user terminal 30a as shown in Fig. 1.
Fig. 9 is a diagram showing a specific structure of a LT issue request 70a as shown in Fig. 1.
Fig. 10 is a diagram showing a specific structure of a LT return request 90a as shown in Fig. 1.
Fig. 11 is a flowchart showing operation of a LT acquisition process.
Fig. 12 is a diagram showing a structure of a menu screen displayed by a GUI 313.
Fig. 13 is a flowchart showing a subroutine in a LT issue/no-issue judgment process (S1004) as shown in Fig. 11.
Fig. 14 is a flowchart showing operation of a content reproduction process.
Fig. 15 is a flowchart showing a subroutine in a LT return/delete process as shown in Fig. 14.
Fig. 16 is a flowchart showing operation of a LT return process.
Fig. 17 is a flowchart showing a subroutine in a usage right delete process as shown in Fig. 16.
Fig. 18 is a block diagram showing an overview of a configuration of a digital content distribution system 1b in a second embodiment of the present invention.
Fig. 19 is a diagram showing structural features of the digital content distribution system 1b.
Fig. 20 is a functional block diagram showing a specific structure of a right management server 20b as shown in Fig. 18.
Fig. 21 is a diagram showing a specific structure of a license data database 22b as shown in Fig. 20.
Fig. 22 is a diagram showing a specific structure of a rule table 22c further held by the license data database 22b as shown in Fig. 20.
Fig. 23 is a diagram showing a specific structure of a LT80b as shown in Fig. 18.
Fig. 24 is a functional block diagram showing a specific structure of a user terminal 30b as shown in Fig. 18.
Fig. 25 is a diagram showing a specific structure of a LD issue request 70b as shown in Fig. 18.
Fig. 26 is a diagram showing a specific structure of a LD return request 90b as shown in Fig. 18.
Fig. 27 is a flowchart showing operation of a LD acquisition process.
Fig. 28 is a diagram showing a structure of a menu screen displayed by a GUI 313.
Fig. 29 is a flowchart showing a subroutine in a to-be-issued LD generation process (S2005) as shown in Fig. 27.
Fig. 30 is a flowchart showing a subroutine in an immediate usage flag/on-usage-end return flag setting process (S2105) as shown in Fig. 29.
Fig. 31 is a flowchart showing a subroutine in an on-right-lapse return flag setting process (S2106) as shown in Fig. 29.
Fig. 32 is a flowchart showing operation of a content reproduction process.
Fig. 33 is a flowchart showing a subroutine in an on-usage-end LD return process (S2220) as shown in Fig. 32.
Fig. 34 is a flowchart showing a subroutine in an on-usage-right-lapse LD return/delete process (S2215) as shown in Fig. 32.
Fig. 35 is a flowchart showing operation of a LD return process.
Fig. 36 is a diagram showing another structural feature of the digital content distribution system 1b.
Fig. 37 is a diagram showing still another structural feature of the digital content distribution system 1b.
Fig. 38 is a diagram showing a specific structure of a LD return/issue request.

### Best Mode for Carrying Out the Invention

### (First Embodiment)

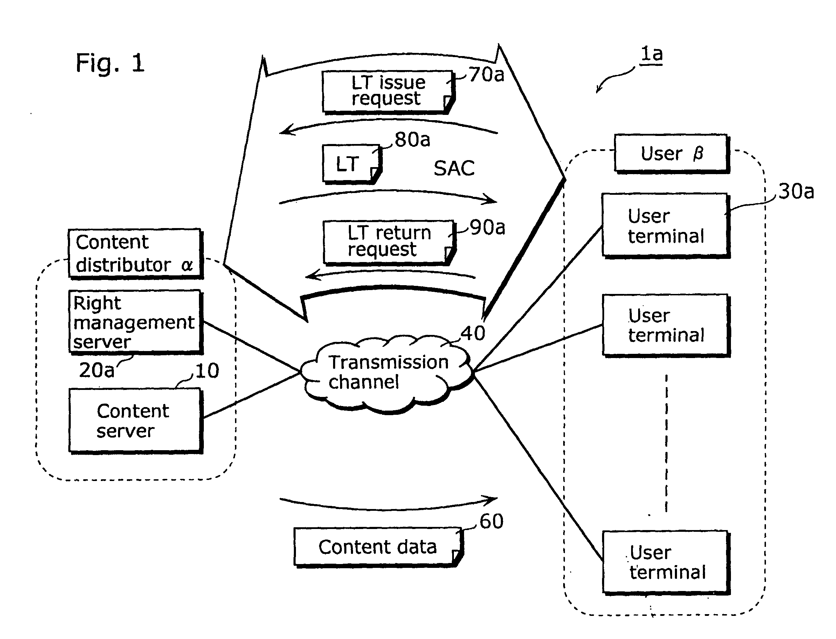

Fig. 1 is a block diagram showing an overview of a configuration of a digital content distribution system in a first embodiment of the present invention.

As shown in Fig. 1, the digital content distribution system 1a is a system for protecting copyrights on content by distributing digital works (contents) encrypted by a content distributor α who is involved in content distribution to a user β, or distributing based on the user's request a license ticket (hereinafter also referred to as "LT") which allows content usage, under the usage right (license) managed by the content distributor α for every content purchased by the user β, so that the user can use the content within the limits of usage rule included in the LT. The digital content distribution system 1a is equipped with at least one content server 10, at least one right management server 20a, at least one user terminal 30a and a transmission channel 40 for connecting the content server 10, the right management server 20a and the user terminal 30a so as to communicate with each other.

The content server 10 is a computer apparatus which is placed on the content distributor α side. More specifically, the content server 10 holds in advance a plurality of content data 60 in which each content encrypted with an encryption key is associated with its content ID, and distributes the requested content data 60 to the user terminal 30a which sent the content distribution request.

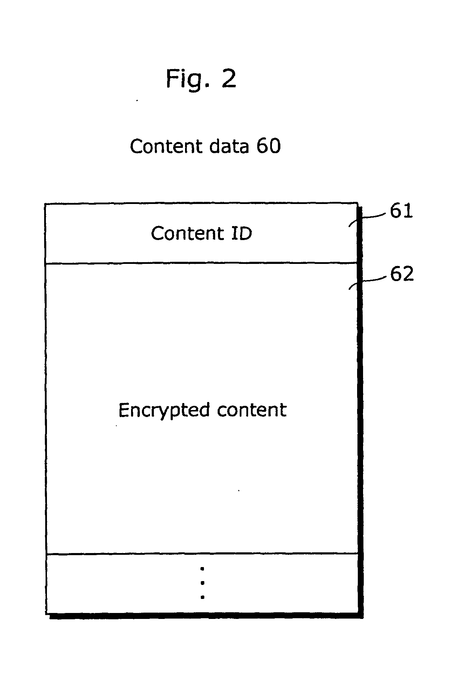

Fig. 2 is a diagram showing the format structure of the content data 60 as shown in Fig. 1.

As shown in Fig. 2, the content data 60 includes a content ID 61, encrypted content 62 and others. The content ID 61 is an ID for identifying a content uniquely in the digital content distribution system 1a. The encrypted content 62 is a content, such as music data and video data, which is encrypted by an encryption key. Therefore, a content decryption key which is paired with the encryption key is needed for reproducing (using) the content.

Note that a content to be encrypted is not limited to music data and video data, but may be a digital content such as an electronic newspaper, an electronic magazine, an electronic book, an electronic map, an electronic dictionary, a still picture, a game, computer software. Also, this first embodiment will be explained assuming that the content data 60 is acquired via the transmission channel 40, but the content data 60 does not always need to be acquired in this manner and it may be acquired via a recording medium such as a CD-ROM.

The right management server 20a is a computer apparatus which is also placed on the content distributor α side, as with the content server 10, and manages content usage right of the user β who receives content distribution service. More specifically, the right management server 20a manages the usage right for each content purchased by the user β so as to distribute a part or a whole of the usage right, the content decryption key and others as a LT80a to the user terminal 30a in response to a LT issue request 70a from the user β, or receive a LT return request 90a including the LT, an identifier indicating the return of the LT and the like from the user terminal 30a and update the usage right. Note that the LT 80a and others will be explained later in detail.

The user terminal 30a is a computer apparatus which is placed on the user β side and receives content distribution service. More specifically, the user terminal 30a sends a content distribution request to the content server 10 to receive distribution of the content data 60 from the content server 10. Or, it sends the LT issue request 70a to the right management server 20a for using the content and receives the LT 80a so as to reproduce the content within the limits of the LT usage rule included in the LT 80a, or sends the LT return request 90a to the right management server 20a.

The transmission channel 40 is a cable or wireless transmission channel, and connects the right management server 20a and the content server 10 and the user terminal 30a so as to communicate with each other.

Note that in order to prevent tapping and spoofing when sending a request such as the above-mentioned LT issue request 70a and the LT return request 90a, the user terminal 30a is structured so as to share a session key with the right management server 20a using a two-way authentication type protocol such as SSL (Secure Sockets Layer), carry out cipher communication of requests from the user terminal 30a and responses from the right-management server 20a such as a LT 80a using this session key, and thus establish an SAC (Secure Authenticated Channel).

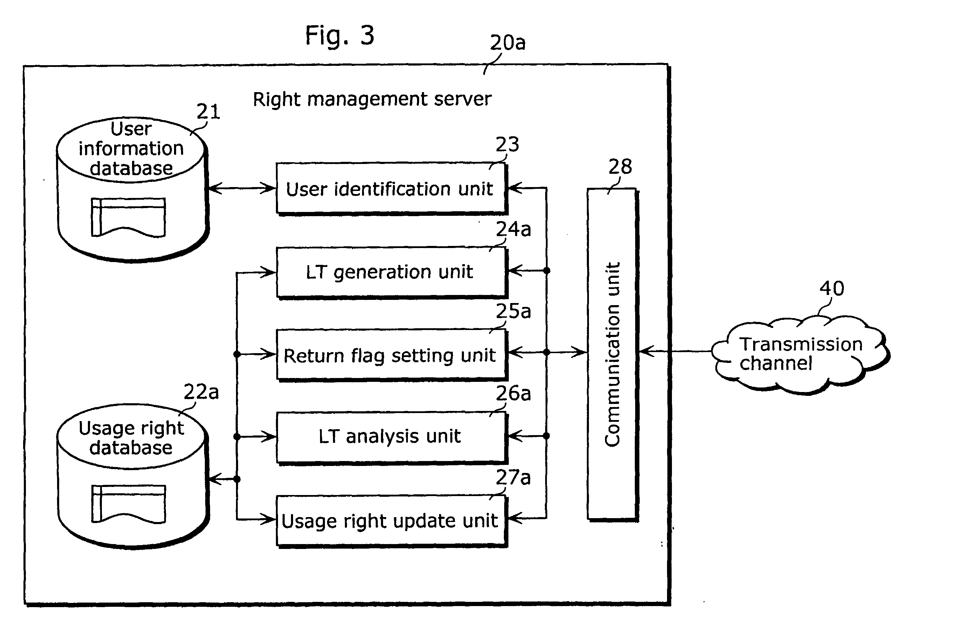

Fig. 3 is a functional block diagram showing the specific structure of the right management server 20a as shown in Fig. 1.

As shown in Fig. 3, the right management server 20a includes a user information database 21, a usage right database 22a, a user identification unit 23, a LT generation unit 24a, a return flag setting unit 25a, a LT analysis unit 26a, a usage right update unit 27a, a communication unit 28 and others.

The user information database 21 is a database (hereinafter referred to also as "DB") for managing the user ID which is unique to a user β registered as a member of this digital content distribution system 1a and the terminal ID which is unique to the user terminal used by the user β by associating them with each other.

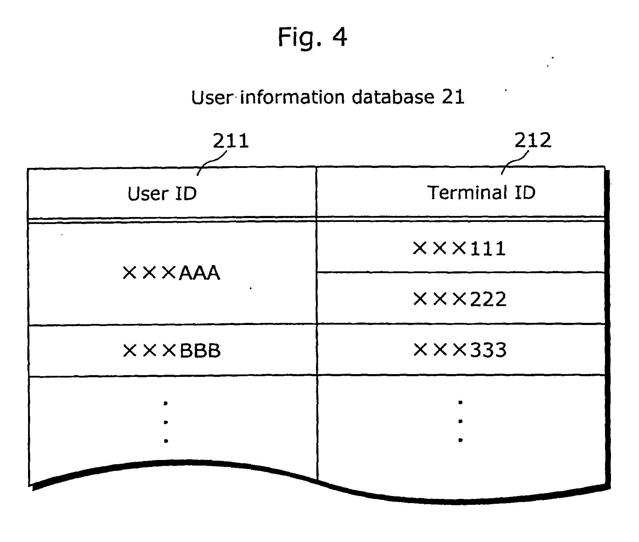

Fig. 4 is a diagram showing the specific structure of the user information database 21.

As shown in Fig. 4, the user information database 21 is a database for managing which user terminal 30a the user β owns, and includes a user ID 211, a terminal ID 212 and others.

The user ID 211 is an ID for identifying the user β uniquely in the digital content distribution system 1a. The terminal ID 212 is an ID for identifying the user terminal 30a uniquely in the digital content distribution system 1a.

Fig. 4 shows that a user β who is identified with a user ID "XXXAAA" has two terminals, a terminal with a terminal ID "XXX111" and a terminal with a terminal ID "XXX222". It also shows that a user β who is identified with a user ID "XXXBBB" has only a terminal with a terminal ID "XXX333".

Data is stored in the user information database 21 when the user β performs processing for his membership registration in order to receive content distribution services under the operation of the content distributor α. This membership registration processing may be performed by communicating with the content distributor α via the transmission channel 40, or through any other means such as sending a document for membership registration. In the membership registration processing, the content distributor α first allocates a user ID 211 to a user β. Then, the terminal ID 212 of the user terminal 30 owned by the user β is notified to the content distributor α by communication, a document or the like, and the notified terminal ID 212 and the user ID 211 allocated to the user β are stored in the user information database 21 by associating them with each other. As a result of performing the above-described membership registration processing, the user information database 21 as shown in Fig. 4 is constructed.

The usage right database 22a as shown in Fig. 3 is a database for managing the usage right 222a of the content purchased by the user β and the user ID by associating them with each other.

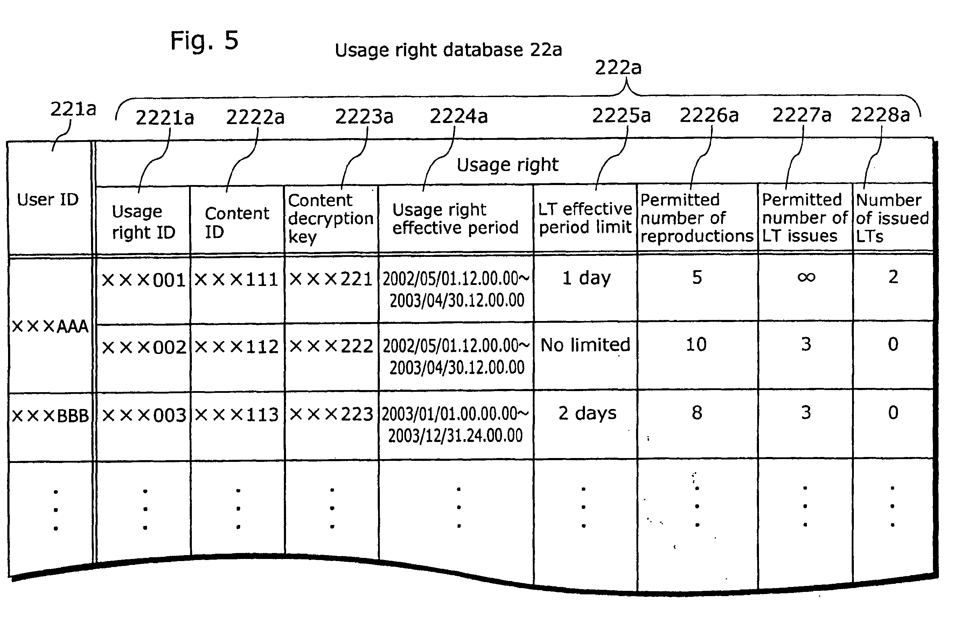

Fig. 5 is a diagram showing the specific structure of the usage right database 22a.

As shown in Fig. 5, the usage right database 22a includes a user ID 221a for identifying a user β, a usage right 222a indicating the details of the usage right purchased by the user, and others.

The usage right 222a includes a usage right ID 2221a that is the ID for the usage right 222a, a content ID 2222a of a content endowed with the usage right 222a, a content decryption key 2223a for decrypting the content, usage right effective period 2224a indicating the effective period of the usage right 222a, a LT effective period limit 2225a for limiting the LT effective period for a LT 80a to the usage right effective period 2224a or the shorter period, a permitted number of reproductions 2226a indicating how many times the content can be reproduced, a permitted number of LT issues 2227a indicating how many LTs 80a can be issued under the usage right 222a, and the number of issued LTs 2228a indicating how many LTs 80a have been issued to the user terminal 30a.

For example, Fig. 5 shows the case where a user β identified with a user ID 211a of "XXXAAA" holds two usage rights 222a identified with usage right IDs 2221a of "XXX001" and "XXX002". It shows that the usage right 222a with the usage right ID 2221a of "XXX001" is a right to a content identified with a content ID 61 of "XXX111", a content decryption key 2223a for decrypting the content is "XXX221", the effective period of the usage right is "2002/05/01.12.00.00∼2003/04/30.12.00.00", the LT effective period limit 2225a is "1 day", the remaining permitted number of reproductions for the content is "5 times", the number of LTs 80a which can be issued under the usage right 222a is "∞" (an infinite number of LTs 80a can be issued), and the number of issued LTs 80a is "2". On the other hand, it shows that the usage right 222a identified with the usage right ID 2221a of "XXX002" is a right to a content identified with the content ID 61 of "XXX112", a content decryption key 2223a for decrypting the content is "XXX222", the effective period of the usage right is "2002/05/01.12.00.00∼2003/04/30/12.00.00", the LT effective period limit 2225a is "no limited", the remaining permitted number of reproductions for the content is "10 times", the number of LTs 80a which can be issued under the usage right 222a is "3", and the number of issued LTs 80a is "0".

Also, a user β identified with a user ID 211a of "XXXBBB" holds one usage right 222a identified with the usage right ID 2221a of "XXX003". It shows that the usage right 222a identified with the usage right ID 2221a of "XXX003" is a right to a content identified with a content ID 61 of "XXX113", a content decryption key 2223a for decrypting the content is "XXX223", the effective period of the usage right is "2003/01/01.00.00.00 ∼ 2003/12/31.24.00.00", the LT effective period limit 2225a is "2 days", the remaining permitted number of reproductions for the content is "8 times", the number of LTs 80a which can be issued under the usage right 222a is "3", and the number of issued LTs 80a is "0".

Here, the LT effective period limit 2225a is information set by a content distributor α for basically setting the LT effective period shorter than the user's own usage right effective period. To be more specific, the LT effective period limit 2225a is the period for which the right may be used on the user terminal 30a after the right management server 20a issued the right. For example, the period shorter than the usage right effective period 2224a, such as 1 day, 2 days and 1 week, is set, or no limited, namely, the same period as the usage right effective period 2224a is set. Since this LT effective period limit 2225s set by the content distributor α causes the effective period of the LT 80a to expire, the LT effective period limit 2225a set to be shorter makes it possible to change the frequency of accesses via a LT return request 90a and a LT issue request 70a to the right management server 20a.

Also, the permitted number of reproductions 2226a is decremented by the number cut out (issued) as LTs 80a from the initial value at the time of a user's purchase, and incremented by the number returned as the LTs 80a by the LT return request 90a.

The initial value of the number of issued LTs 2228a is "0", and it is incremented by "1" when the right management server 20a issues the LT 80a to the user terminal 30a, and it is decremented by "1" when the user terminal 30a returns the LT 80a to the right management server 20a.

Upon receipt of the LT issue request 70a and the LT return request 90a sent from the user terminal 30a via the communication unit 28, the user identification unit 23 as shown in Fig. 3 identifies a user β (user ID) based on the terminal ID included in the received LT issue request 70a and the LT return request 90a, with reference to the user information database 21.

The LT generation unit 24a is a means for generating a main part of a LT 80a from a usage right managed by the usage right database 22a when it receives the LT issue request 70a sent from the user terminal 30a via the communication unit 28.

The return flag setting unit 25a is a means for setting information of "Return required" or "No return required" on a return flag included in the LT 80a generated by the LT generation unit 24a. To be more specific, the return flag setting unit 25a sets a return flag to "Return required" in at least one of the cases where the permitted number of LT issues included in the usage right which is managed in the usage right database 22a and the source of the generated LT 80a is a finite value and where the expiration time of the LT effective period set for the LT 80a is earlier than that of the usage right effective period, while it sets to "No return required" when the permitted umber of LT issues is "∞" and the expiration time of the LT effective period is same as that of the usage right effective period.

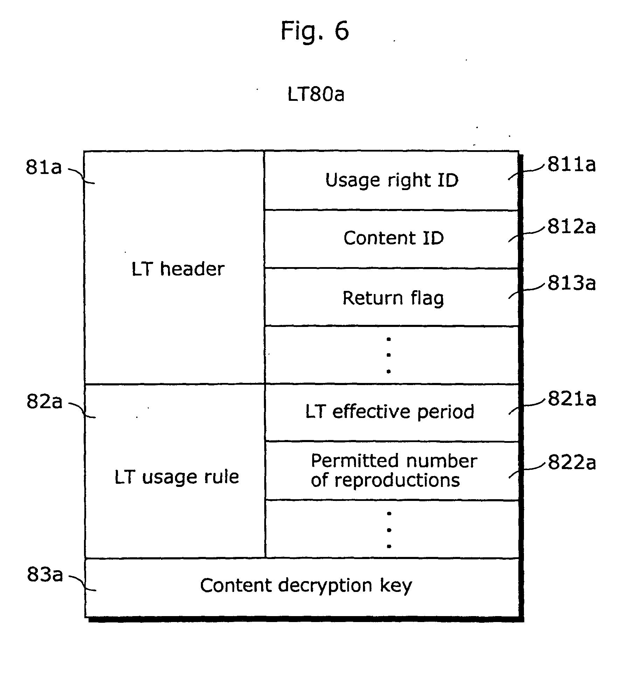

Fig. 6 is a diagram showing the specific structure of the LT80a generated by the LT generation unit 24a and the return flag setting unit 25a.

As shown in Fig. 6, the LT 80a includes a LT header 81a, a LT usage rule 82a and a content decryption key 83a.

The LT header 81a includes a usage right ID 811a, a content ID 812a and a return flag 813a.

In the usage right ID 811a, a usage right ID 2221a of a usage right 222a which is the source of an issued LT 80a is stored.

In the content ID 812a, a content ID of a content which can be reproduced using the LT 80a is stored.

In the return flag 813a, information indicating whether the LT 80a needs to be returned to the right management server 20a or not is described. Note that the return flag setting unit 25a sets the information for the return flag 813a. The user terminal 30a judges whether it returns the LT 80a to the right management server 20a or not based on the return flag 813a.

The LT usage rule 82a includes a LT effective period 821a and the permitted number of reproductions 822a.

In the LT effective period 821a, the period for which the LT 80a is effective is stored. This LT effective period 821a is determined based on the usage right effective period 2224a and the LT effective period limit 2225a of the usage right 222a, and the time when the communication unit 28 receives the LT issue request 70a.

In the permitted number of reproductions 822a, the number of times that content can be reproduced is stored.

In the content decryption key 83a, a key for decrypting the content is stored.

The LT 80a structured as mentioned above is sent from the right management server 20a to the user terminal 30a, and the user terminal 30a reproduces a content using this LT 80a.

Here, how to generate the LT effective period 821a will be explained in more detail.

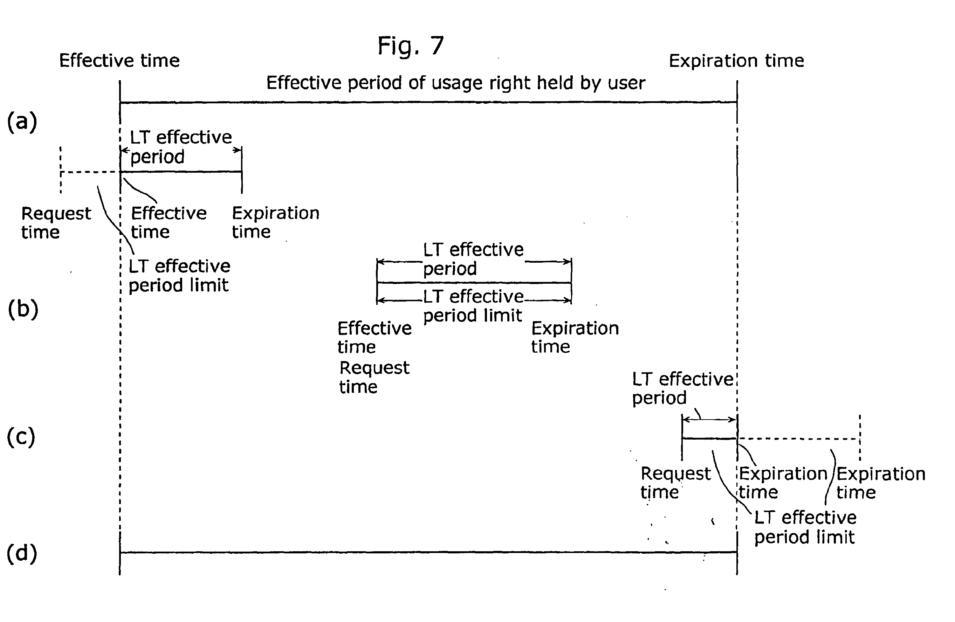

Fig. 7 is a diagram showing the relationship between the LT effective period limit 2225a of the usage right 222a and the LT effective period 821a set for the LT 80a.

First, it will be explained the case where the LT effective period limit 2225a in the usage right database 22a (1 day, 2 days or so, for instance) is shorter than the usage right effective period 2224a and the timing of receiving the LT issue request 70a from a user β is close to the effective time of the usage right effective period 2224a (the case as shown in (a) of Fig. 7). To be more specific, as shown in (a) of Fig. 7, it is the case where the time of receiving the LT issue request 70a (request time) is earlier than the effective time of the usage right effective period 2224a and the expiration time of the LT effective period limit 2225a starting at the request time is later than the effective time of the usage right effective period 2224a. In this case, the start time (effective time) of the usage right effective period 2224a held by the user β is set as the start time (effective time) of the LT effective period 821a and the expiration time of the LT effective period limit 2225a starting at the request time (the request time + LT effective period limit 2225a) is set as the expiration time of the LT effective period 821a. Therefore, in this case, the LT effective period 821a of the LT 80a is shorter than the LT effective period limit 2225a.

Next, it will be explained the case where the LT effective period limit 2225a in the usage right database 22a is shorter than the usage right effective period 2224a and the timing of receiving the LT issue request 70a from a user β is not close to the effective time or the expiration time of the usage right effective period 2224a (the case as shown in (b) of Fig. 7). To be more specific, as shown in (b) of Fig. 7, it is the case where the time of receiving the LT issue request 70a (request time) is later than the effective time of the usage right effective period 2224a and the expiration time of the LT effective period limit 2225a starting at the request time is earlier than the expiration time of the usage right effective period 2224a. In this case, the request time is set as the start time (effective time) of the LT effective period 821a and the expiration time of the LT effective period limit 2225a starting at the request time (the request time + LT effective period limit 2225a) is set as the expiration time of the LT effective period 821a. Therefore, in this case, the LT effective period 821a of the LT 80a agrees with the LT effective period limit 2225a.

Next, it will be explained the case where the LT effective period limit 2225a in the usage right database 22a is shorter than the usage right effective period 2224a and the timing of receiving the LT issue request 70a from a user β is close to the expiration time of the usage right effective period 2224a (the case as shown in (c) of Fig. 7). To be more specific, as shown in (c) of Fig. 7, it is the case where the time of receiving the LT issue request 70a (request time) is earlier than the expiration time of the usage right effective period 2224a and the expiration time of the LT effective period limit 2225a starting at the request time is later than the expiration time of the usage right effective period 2224a. In this case, the request time is set as the start time (effective time) of the LT effective period 821a and the expiration time of the usage right effective period 2224a is set as the end time (expiration time) of the LT effective period 821a. Therefore, in this case, the LT effective period 821a of the LT 80a is shorter than the LT effective period limit 2225a.

Next, the case where there is no limit to the LT effective period limit 2225a in the usage right database 22a (the case as shown in (d) of Fig. 7) will be explained. In this case, as shown in (d) of Fig. 7, the effective time of the usage right effective period 2224a is set as the start time (effective time) of the LT effective period 821a and the expiration time of the usage right effective period 2224a is set as the end time (expiration time) of the LT effective period 821a, regardless of the request time. Therefore, in this case, the LT effective period 821a of the LT 80a agrees with the usage right effective period 2224a.

Needless to say, in the case of X ∩ Y = φ, where X satisfies Request time ≦X≦ (Request time + LT effective period limit 2225a) and Y satisfies Effective time of Usage right effective period 2224a ≦Y≦ Expiration time of Usage right effective period 2224a, it is judged that the LT effective period 821a is an empty set, namely, the LT 80a cannot be issued.

Also, in the first embodiment, the period other than the usage right effective period 2224a is judged to be NG (unavailable) in the cases of (a) of Fig. 7 and (c) of Fig. 7, but the LT effective period 821a which is same as the LT effective period limit 2225a may be set under a service and content provider's own rules according to his intent.

Furthermore, the LT effective period limit 2225a is predetermined under a predetermined rule, but it may be structured so that the LT effective period 821a is generated variably and appropriately according to ever-changing situations (such as a content holder's intent, how a content is used, change of desired levels of keeping track the content usage, and a user's content usage status).

The LT analysis unit 26a as shown in Fig. 3 is a means for analyzing the details of the LT 80a returned from the user terminal 30a.

The usage right update unit 27a updates the details of the usage right 222a when the LT 80a is issued to the user terminal 30a or returned from the user terminal 30a. How to update the usage right 222a will be explained later.

The communication unit 28 communicates with the user terminal 30a via the transmission channel 40. To be more specific, the communication unit 28, which is a communication interface for communicating with the user terminal 30a via the transmission channel 40, analyzes a request such as a LT issue request 70a and a LT return request 90a sent from the user terminal 30a, requests the user identification unit 23, the LT generation unit 24a and the usage right update unit 27a to perform processing depending upon the analysis result, distributes the LT 80a generated by the LT generation unit 24a and the return flag setting unit 25a to the user terminal 30a, or carries out cipher communication with the user terminal 30a via the SAC established between them after encrypting the above request or response with a session key.

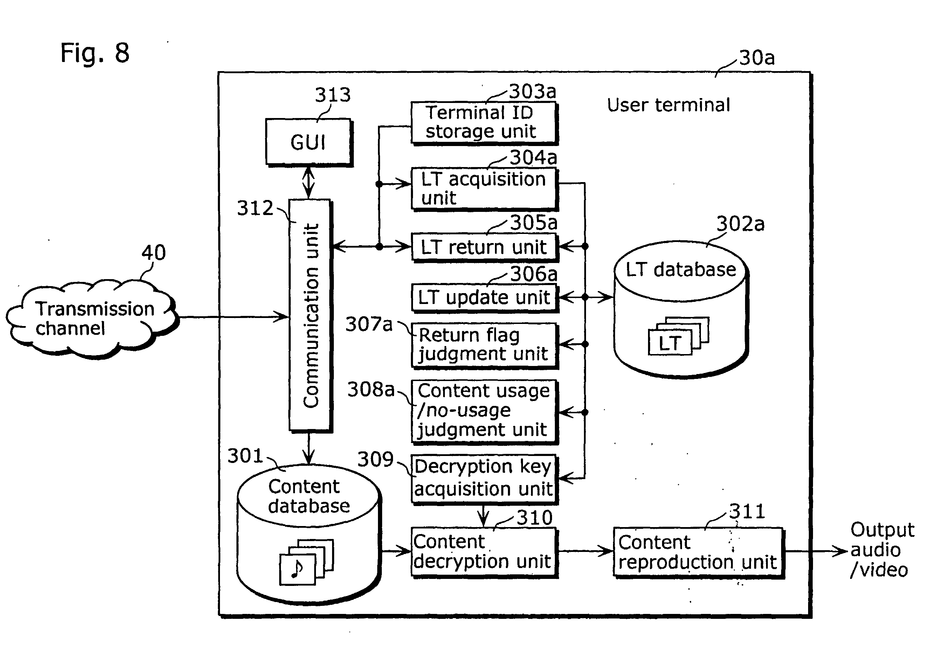

Fig. 8 is a functional block diagram showing the specific structure of the user terminal 30a as shown in Fig. 1.

As shown in Fig. 8, the user terminal 30a includes a content database 301, a LT data base 302a, a terminal ID storage unit 303a, a LT acquisition unit 304a, a LT return unit 305a, a LT update unit 306a, a return flag judgment unit 307a, a content usage/no-usage judgment unit 308a, a decryption key acquisition unit 309, a content decryption unit 310, a content reproduction unit 311, a communication unit 312, and a GUI 313.

The content database 301 is a database for storing and managing content data 60 distributed from the content server 10.

The LT database 302a is a database for managing the LT 80a issued from the right management server 20a securely.

The terminal ID storage unit 303a is a means for pre-storing the terminal ID identifying the user terminal 30a uniquely.

The LT acquisition unit 304a is a means for acquiring the LT 80a from the right management server 20a by generating the LT issue request 70a and sending it to the right management server 20a.

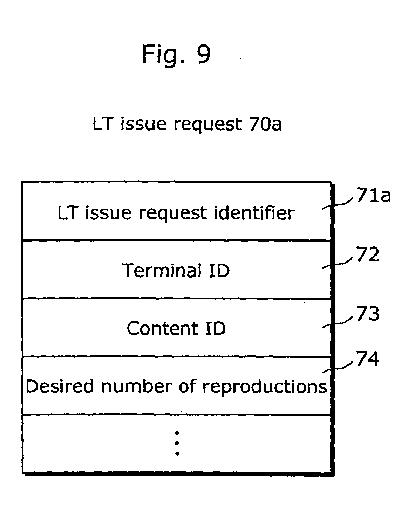

Fig. 9 is a diagram showing the specific structure of the LT issue request 70a generated by the LT acquisition unit 304a.

As shown in Fig. 9, the LT issue request 70a includes a LT issue request identifier 71a, a terminal ID 72, a content ID 73, a desired number of reproductions 74 and so on.

In the LT issue request identifier 71a, information indicating that this data is a LT issue request 70a is stored. In the terminal ID 72, the terminal ID of the user terminal 30a which sends this LT issue request 70a is stored. In the content ID 73, the content ID of the content which is to be reproduced using a LT 80a to be acquired is stored. In the desired number of reproductions 74, a value which is desired to be set as a permitted number of reproductions of the LT 80a to be acquired is stored.

The LT return unit 305a as shown in Fig. 8 is a means for returning the LT 80a to the right management server 20a by generating the LT return request 90a and sending it to the right management server 20a.

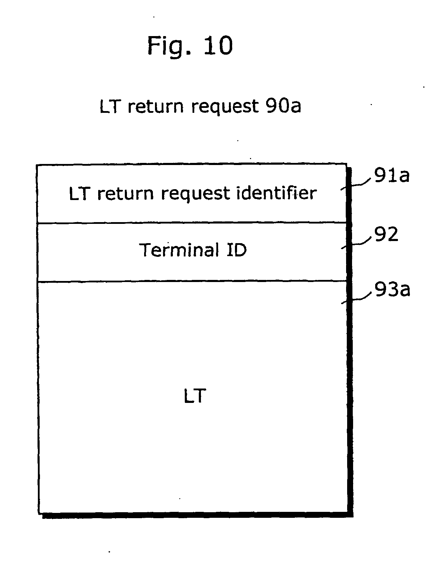

Fig. 10 is a diagram showing the specific structure of the LT return request 90a generated by the LT return unit 305a.

As shown in Fig. 10, the LT return request 90a includes a LT return request identifier 91a, a terminal ID 92, a LT 93a and so on.

In the LT return request identifier 91a, information indicating that this data is a LT return request 90a is stored. In the terminal ID 92, the terminal ID of the user terminal 30a which sends the LT return request 90a is stored. In the LT 93a, the LT to be returned itself is stored.

The LT update unit 306a as shown in Fig. 8 is a means for updating the details of the LT 80a. To be more specific, the LT update unit 306a performs processing for decrementing the value of the permitted number of reproductions in the LT 80a by "1" after reproducing the content.

The return flag judgment unit 307a is a means for judging whether the LT 80a needs to be returned to the right management server 20a or not with reference to the return flag in the LT 80a.

The content usage/no-usage judgment unit 308a judges whether the content can be reproduced or not with reference to the LT effective period and the permitted number of reproductions in the LT 80a. To be more specific, the content usage/no-usage judgment unit 308a judges that the content can be reproduced when the present time is within the LT effective period 821a and the value of the permitted number of reproductions 822a is "1" or larger.

Note that it is assumed that the user terminal 30a has a secure clock function so that the content usage/no-usage judgment unit 308a can acquire the present time. When the user terminal 30a does not have a clock function, the user terminal 30a may be structured so as to judge whether the content can be reproduced or not based on the permitted number of reproductions 822a in the LT 80a by overriding the LT effective period 821a, or judge that the content cannot be reproduced unconditionally.

The decryption key acquisition unit 309 is a means for acquiring a content decryption key for decrypting a content.

The content decryption unit 310 is a means for retrieving a content from the content database 301 and decrypting the encrypted content 62 using the content decryption key 2223a acquired by the decryption key acquisition unit 309.

The content reproduction unit 311 is a means for reproducing the content decrypted by the content decryption unit 310, and music and video are outputted from a speaker or a display thereof not shown in the figures.

The communication unit 312 is a means for communicating with the content server 10 and the right management server 20a via the transmission channel 40. To be more specific, the communication unit 312 is a communication interface that communicates with the content server 10 and the right management server 20a via the transmission channel 40, and analyzes responses such as content data 60 sent from the content server 10 and a LT 80a sent from the right management server 20a, requests the content database 301, the LT acquisition unit 304a and the GUI 313 to perform processing depending upon the analysis result, sends the LT issue request 70a generated by the LT acquisition unit 304a and the LT return request 90a generated by the LT return unit 305a to the right management server 20a, or carries out cipher communication with the right management server 20a via the SAC established between them after encrypting the above-mentioned requests and responses with a session key.

The GUI 313 includes a liquid crystal display and a user operation/input unit such as a keyboard and a mouse, and displays various buttons and information for visual and easy judgment on the liquid crystal display and accepts user's instructions via the user operation/input unit.

Next, operation of each unit in the digital content distribution system 1a will be explained step by step using a flowchart. Note that the following explanation will be made on the assumption that the procedure of user registration of a user β (registration of the terminal ID and the user ID), distribution of a desired content to the user terminal 30a and purchase procedure of the usage right of the content have been already explained.

First, the operation (LT acquisition process) performed when the user terminal 30a acquires a LT 80a from the right management server 20a in the digital content distribution system 1a of the first embodiment will be explained.

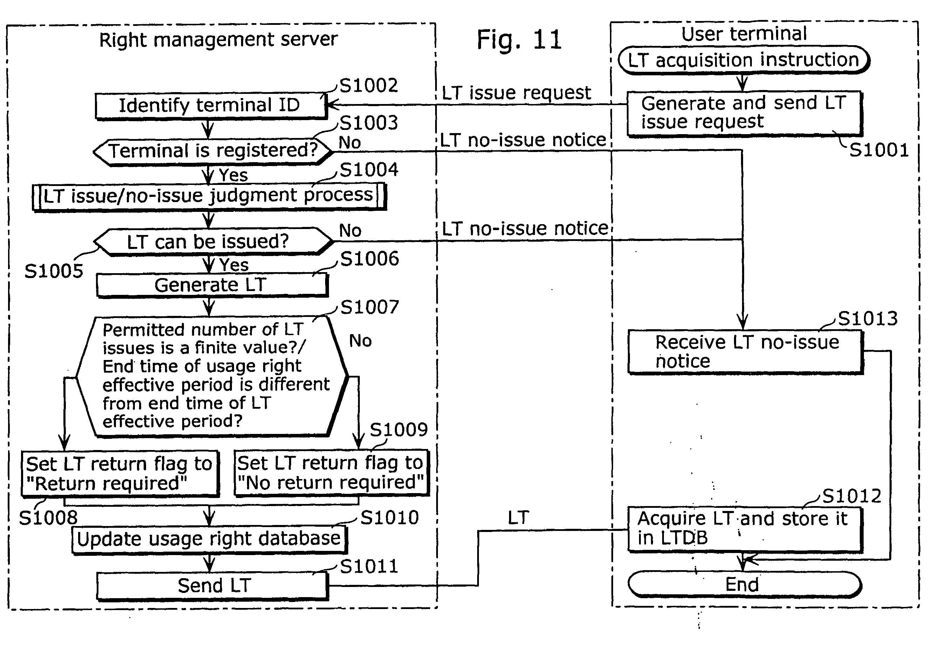

Fig. 11 is a flowchart showing the operation of the LT acquisition process.

S1001: Upon receipt of the LT acquisition instruction from the user β via the GUI 313, the LT acquisition unit 304a generates a LT issue request 70a in response to the LT acquisition instruction from the user β and sends it to the right management server 20a via the communication unit 312.

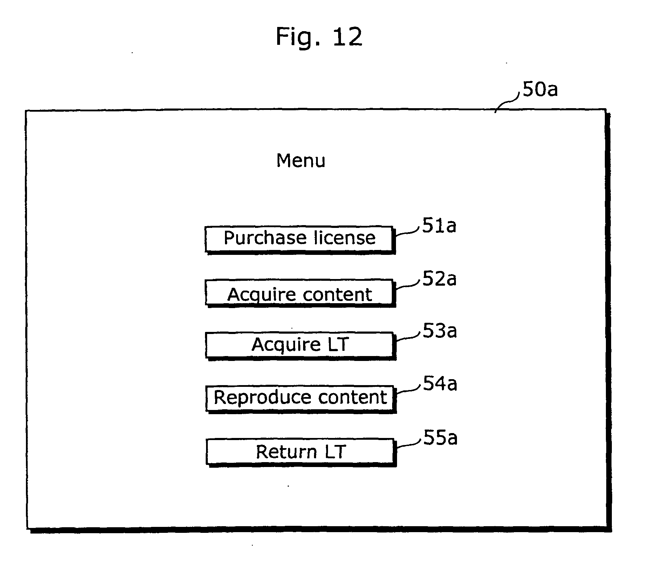

This LT acquisition instruction from the user β includes a content ID 61 of a content which the user wants to reproduce by acquiring the LT 80a, and information specifying a value to be described in a desired number of reproductions 74 in the LT issue request 70a. As shown in Fig. 12, for example, the user β clicks an "Acquire LT" button 53a on a menu screen displayed by the GUI 313, selects one content which he wants to reproduce from among the content data 60 stored in the content database 301 displayed in a list form on the LT acquisition menu screen not shown here which is activated by the click, and then inputs the desired number of reproductions, and thus this LT acquisition instruction is generated. Note that on the menu screen, a "Purchase license" button 51a operated when purchasing a license, an "Acquire content" button 52a operated when acquiring content, a "Reproduce content" button 54a operated when reproducing a content and a "Return LT" button 55a operated when returning a LT are provided in addition to the "Acquire LT" button 53a.

According to this LT acquisition instruction, a terminal ID pre-stored in the terminal ID storage unit 303a is set as the terminal ID 72 in the LT issue request 70a which is to be sent to the right management server 20a, a content ID included in the LT acquisition instruction from the user β is set as the content ID 73, and a value specified by the LT acquisition instruction from the user β is set as the desired number of reproductions 74.

Note that when sending the LT issue request 70a, the communication unit 312 of the user terminal 30a and the communication unit 28 of the right management server 20a establish an SAC.

S1002: Upon receipt of the LT issue request 70a via the communication unit 28, the user identification unit 23 of the right management server 20a identifies the terminal ID included in the LT issue request 70a.

S1003: After identifying the terminal ID, the user identification unit 23 judges whether the terminal is registered or not, namely, whether the terminal ID is stored in the user information database 21 or not, with reference to the user information database 21. When the terminal ID included in the LT issue request 70a is not stored in the user information database 21 (No in S1003), the user identification unit 23 considers the user as an unauthorized user for this digital content distribution system 1a and notifies the user terminal 30a that a LT cannot be issued. On the other hand, when the terminal ID included in the LT issue request 70a is stored in the user information database 21, the user identification unit 23 acquires the user ID associated with the terminal ID and passes the user ID to the LT generation unit 24a.

S1004: Upon receipt of the user ID of the user β from the user identification unit 23, the LT generation unit 24a executes the LT issue/no-issue judgment process, and identifies the usage right 222a which is to be the source for issuing a LT 80a and judges whether the LT 80a can be issued or not based on the user ID and the LT issue request 70a received via the communication unit 28.

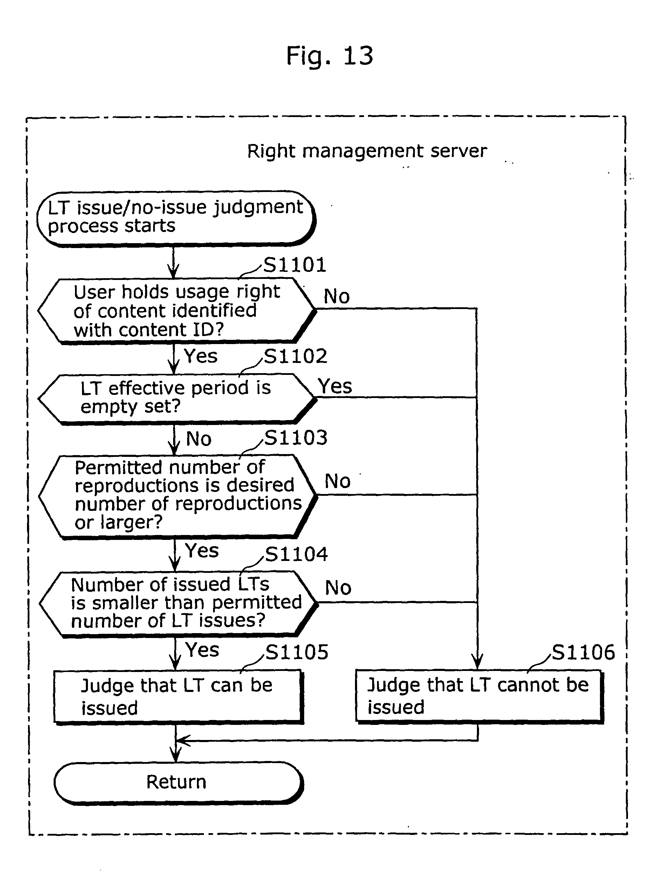

Fig. 13 is a flowchart showing the subroutine in the LT issue/no-issue judgment process (S1004) as shown in Fig. 11.

S1101: The LT generation unit 24a judges whether or not the user β identified by the user identification unit 23 in S1002 holds the usage right 222a of the content identified with the content ID 73 included in the LT issue request 70a, with reference to the usage right database 22a. When it is judged that the user β holds the usage right 222a of the content identified with the content ID 73 included in the LT issue request 70a, the LT generation unit 24a identifies the usage right 222a as a usage right 222a which is to be the source for issuing the LT 80a and goes on to the processing in S1102. On the other hand, when it is judged that the user β does not own the usage right 222a of the content identified with the content ID 73 included in the LT issue request 70a, the LT generation unit 24a goes on to the processing in S1106.

S1102: The LT generation unit 24a judges whether the LT effective period is an empty set or not with reference to the usage right effective period 2224a and the LT effective period limit 2225a of the usage right 222a identified in S1101. Here, when the LT effective period is not an empty set, namely, when it is any of the cases as shown in (a)∼(d) of Fig. 7, the LT generation unit 24a goes on to the processing in S1103. On the other hand, when the LT effective period is an empty set, the LT generation unit 24a goes on to the processing in S1106.

S1103: The LT generation unit 24a compares the permitted number of reproductions 2226a of the usage right 222a identified in S1101 and the desired number of reproductions 74 in the LT issue request 70a to judge whether the permitted number of reproductions 2226a of the usage right 222a identified in S1101 is the desired number of reproductions 74 in the LT issue request 70a or larger. Here, when the LT generation unit 24a judges that the permitted number of reproductions 2226a of the usage right 222a is the desired number of reproductions 74 in the LT issue request 70a or larger, it goes on to the processing in S1104. On the other hand, when it judges that the permitted number of reproductions 2226a of the usage right 222a is smaller than the desired number of reproductions 74 in the LT issue request 70a, it goes on to the processing in 51106.

S1104: The LT generation unit 24a compares the permitted number of LT issues 2227a and the number of issued LTs 2228a of the usage right 222a identified in S1101 to judge whether the number of issued LTs 2228a is smaller than the permitted number of LT issues 2227a or not. Here, when the LT generation unit 24a judges that the number of issued LTs 2228a is smaller than the permitted number of LT issues 2227a, it goes on to the processing in S1105. On the other hand, when it judges that the number of issued LTs 2228a is the permitted number of LT issues 2227a or larger, it goes on to the processing in S1106.

S1105: The LT generation unit 24a judges that the LT 80a can be issued and returns to the main routine as shown in Fig. 11.

S1106: the LT generation unit 24a judges that the LT 80a cannot be issued and returns to the main routine as shown in Fig. 11.

S1005: When the LT generation unit 24a judges in S1004 that the LT cannot be issued, it considers that there exists no usage right for allowing LT issue although the user is an authorized user for this digital content distribution system 1a, and notifies the user terminal 30a that the LT cannot be issued. On the other hand, when it judges that the LT can be issued, it goes on to S1006.

S1006: When the LT generation unit 24a judges in Step S1004 that the LT can be issued, it generates the LT 80a based on the LT issue request 70a. To be more specific, the LT generation unit 24a sets a content ID included in the LT issue request 70a as a content ID 812a in the LT 80a to be generated. Also, the LT generation unit 24a sets a LT effective period calculated based on the usage right effective period 2224a and the LT effective period limit 2225a of the usage right 222a identified in S1004 and the point of time when the LT issue request 70a is received, as a LT effective period 821a. The LT generation unit 24a also sets a value of the desired number of reproductions 74 included in the LT issue request 70a as a permitted number of reproductions 822a. The LT generation unit 24a further sets the content decryption key 2223a of the usage right 222a identified in S1004 as a content description key 83a.

Note that the return flag 813a is set in S1007∼S1009 which will be described later.

S1007: The return flag setting unit 25a judges whether the permitted number of LT issues 2227a of the usage right 222a identified in S1004 is a finite value or not and also judges whether the end date and time (expiration time) of the usage right effective period 2224a is different from the end date and time (expiration time) of the LT effective period or not.

S1008: When it is judged in S1007 that the permitted number of LT issues 2227a is a finite value or the expiration time of the usage right effective period 2224a is different from the expiration time of the LT effective period, the return flag setting unit 25a sets the return flag 813a of the LT 80a generated by the LT generation unit 24a in 51006 to "Return required". In other words, in at least one of the case where it is judged that the permitted number of LT issues 2227a is a finite value and the cases of (a) and (b) of Fig. 7, the return flag setting unit 25a sets the return flag 813a of the LT 80a to "Return required". This is because further issue of the LT 80a may be impossible if the LT is not returned when the permitted number of LT issues 2227a is a "finite value". Also, in the cases of (a) and (b) of Fig. 7, the permitted number of reproductions for the LT whose usage right has lapsed due to expiration of the LT effective period on the terminal is not always "0", and if the LT is returned in this case, the permitted number of reproductions, which is to be under the management of the server, can be increased.

S1009: When it is judged in S1007 that the permitted number of LT issues 2227a is "∞" and the expiration time of the usage right effective period 2224a is same as the expiration time of the LT effective period, the return flag setting unit 25a sets the return flag 813a of the LT 80a generated by the LT generation unit 24a in 51006 to "No return required". In other words, when it is judged that the permitted number of LT issues 2227a is "∞" and it is the case of (c) of Fig. 7 and the case of (d) of Fig. 7 where there is no limit to the LT effective period limit 2225a, the return flag setting unit 25a sets the return flag 813a of the LT 80a to "No return required". This is because further issue of the LT 80a is possible even if the LT is not returned when the permitted number of LT issues 2227a is "∞", and because, in the cases of (c) and (d) of Fig. 7, there is no possibility that the permitted number of reproductions, which is to be under the management of the server, is increased even if the LT whose usage right has lapsed is returned.

S1010: The usage right update unit 27a updates the details of the usage right 222a identified in S1004. To be more specific, the usage right update unit 27a performs processing of decrementing the permitted number of reproductions 2226a of the usage right 222a identified in 51004 by the value of the permitted number of reproductions 822a in the LT 80a generated by the LT generation unit 24a in 51006, and incrementing the number of issued LTs 2228a of the usage right 222a identified in S1004 by "1".

S1011: The communication unit 28 sends the LT 80a generated by the LT generation unit 24a in S1006 to the user terminal 30a.

S1012: The LT acquisition unit 304a of the user terminal 30a receives the LT 80a sent in S1011, via the communication unit 312, and stores the received LT 80a in the LT database 302a. Then, the LT acquisition unit 304a notifies the user β via the GUI 313 that the acquisition of the LT 80a has completed, and ends the processing.

S1013: Note that when it is judged in S1003 or S1005 that the LT cannot be issued, the LT acquisition unit 304a receives the LT no-issue notice from the right management server 20a. In this case, the LT acquisition unit 304a notifies the user β via the GUI 313 that the LT 80 could not be acquired, and ends the processing.

Note that it has been explained that the desired number of reproductions 74 in the LT issue request 70a is set to a value specified by the user β in S1001, but it may be set to a predetermined value.

Also, in the first embodiment, the usage right update unit 27a updates the details of the usage right 222a identified in 51004 immediately after the setting of the return flag is completed (S1008 or S1009). However, upon receipt of the LT 80a, the LT acquisition unit 304a sends a message indicating the receipt of the LT 80a to the right management server 20a, and thus the usage right update unit 27a may update the details of the usage right 222a identified in S1004 after receiving the message indicating the receipt of the LT 80a from the user terminal 30a. This makes it possible to avoid such a glitch that a usage right 222a is reduced even though the user terminal 30a has not yet received the LT 80a.

Furthermore, in the first embodiment, it is judged that the LT cannot be issued (S1106) when it is judged that the permitted number of reproductions 2226a of the usage right 222a is smaller than the desired number of reproductions 74 in the LT issue request 70a (No in S1103). However, for example, when the desired number of reproductions 74 is "2" and the permitted number of reproductions 2226a is "1", namely, when the permitted number of reproductions 2226a remains although it is less than the desired number of reproductions 74, it may be judged that the LT can be issued for issuing the LT 80a with the permitted number of reproductions of "1". In this case, it is preferable to send a message indicating that there remains only "1" of the permitted number of reproductions 2226a in the usage right 222a as well as the LT 80a.

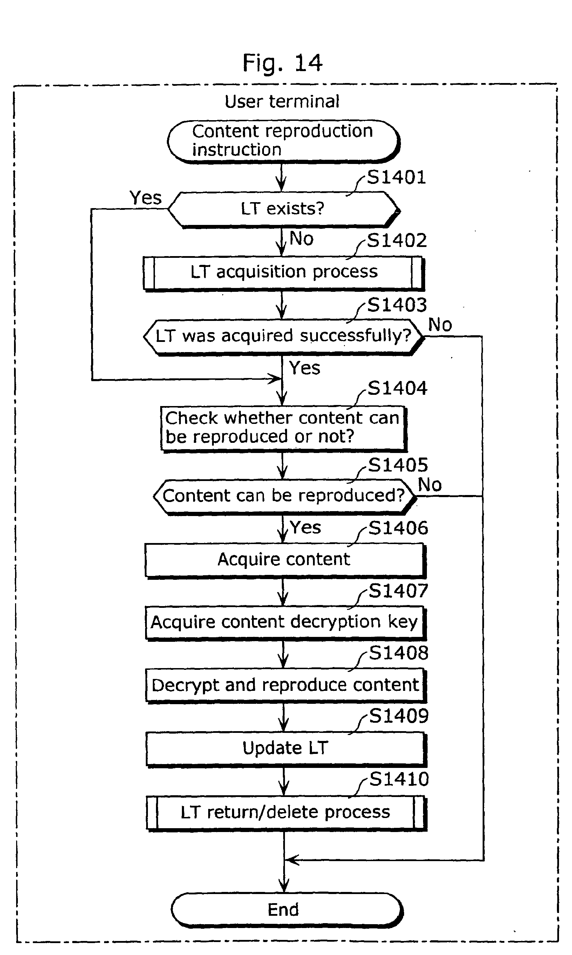

Next, operation executed by the user terminal 30a when reproducing content (content reproduction process) in the digital content distribution system in the present embodiment will be explained with reference to a flowchart of Fig. 14.

Fig. 14 is a flowchart showing operation executed by each unit of the user terminal 30a when reproducing a content.

S1401: Upon receipt of a content reproduction instruction from a user β via the GUI 313, the content usage/no-usage judgment unit 308a examines, in response to the content reproduction instruction from the user β, whether there exists a LT 80a corresponding to the content which the user β wants to reproduce in the LT database 302a or not.

This content reproduction instruction from the user β includes information identifying the content which the user β wants to reproduce (content ID). As shown in Fig. 12, for example, the user β clicks a "Reproduce content" button 54a on a menu screen, and selects one content which the user wants to reproduce from among the content data 60 stored in the content database 301 displayed in a list form on the content reproduction menu screen not shown here which is activated by the click, and thus this content reproduction instruction is generated.

When the LT 80a exists, it goes on to the processing in S1404. When the LT 80a does not exist, it goes on to S1402.

S1402: When the desired LT 80a does not exist in the LT database 302a, the content usage/no-usage judgment unit 308a requests the LT acquisition unit 304a to execute the LT acquisition process which has been explained in Fig. 11 so as to cause it to execute the LT acquisition process.

S1403: When the content usage/no-usage judgment unit 308a failed to acquire the LT 80a as a result of causing the LT acquisition unit 304a to execute the LT acquisition process, it notifies the user β via the GUI 313 that the content cannot be reproduced, and ends the processing. When it succeeded in acquisition of the LT 80a, it goes on to the processing in S1404.

S1404: When the desired LT 80a exists in the LT database 302a (Yes in S1401), or when the content usage/no-usage judgment unit 308a succeeded in acquisition of the LT 80a by executing the LT acquisition process (Yes in S1403), the content usage/no-usage judgment unit 308a judges whether the content can be reproduced or not with reference to the details of the LT 80a associated with the content which the user β wants to reproduce. This is judged with reference to the LT effective period 821a and the permitted number of reproductions 822a in the LT 80a. To be more specific, the content usage/no-usage judgment unit 308a judges that the content can be reproduced when the present time is within the LT effective period 821a and the value of the permitted number of reproductions 822a is "1" or larger, and it judges that the content cannot be reproduced in other cases.

S1405: When it is judged that the content can be reproduced in S1404, the processing goes to S1406. When it is judged that the content cannot be reproduced in S1404, the content usage/no-usage judgment unit 308a notifies the user β via the GUI 313 that the content cannot be reproduced, and ends the processing.

S1406: The content decryption unit 310 retrieves the content which the user β wants to reproduce from the content database 301.

S1407: The decryption key acquisition unit 309 acquires a content decryption key 83a from the LT 80a associated with the content which the user β wants to reproduce.

S1408: The content decryption unit 310 decrypts the content retrieved in S1406 using the content decryption key 83a acquired by the decryption key acquisition unit 309 in S1407, and the content reproduction unit 311 reproduces the content decrypted by the content decryption unit 310.

S1409: The LT update unit 306a updates the details of the LT 80a used for reproducing the content. To be more specific, when the content reproduction unit 311 starts reproduction, the LT update unit 306a starts up a secure timer to manage one reproduction of the content based on the cumulative usage time indicating the total amount of time of the content reproduction, one time check threshold and the like. And when the content is reproduced one time, the LT update unit 306a performs the processing of decrementing the value of the permitted number of reproductions 822a in the LT 80a by "1".

S1410: Once the LT is updated, the LT return unit 305a executes the LT return/delete process of returning the LT 80a to the right management server 20a or deleting it, and ends the operation when reproducing the content.

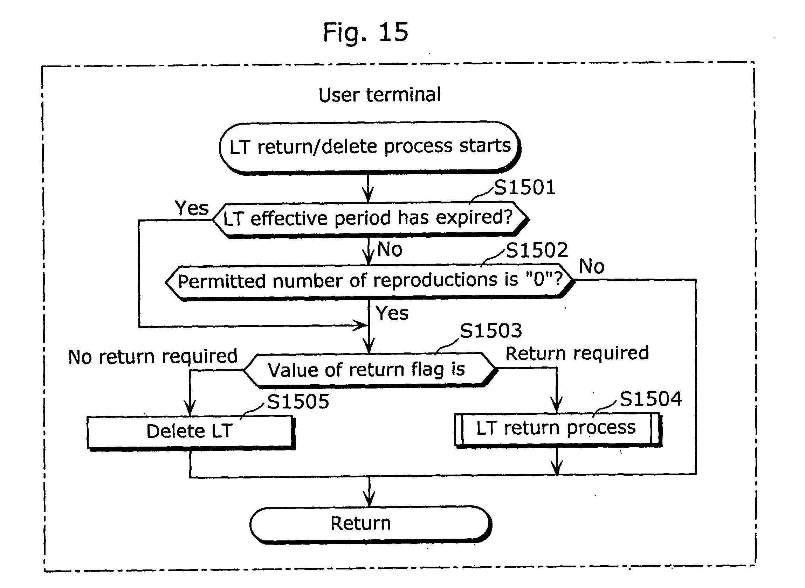

Next, the LT return/delete process of S1410 in Fig. 14 will be explained using a flowchart of Fig. 15.

Fig. 15 is a flowchart showing the subroutine of the LT return/delete process as shown in Fig. 14. Note that this LT return/delete process is a process for judging whether the LT 80a is valid or not to return the LT 80a to the right management server 20a or delete it when it is invalid.

S1501: First, the LT update unit 306a examines whether or not the present time has passed the end time, namely, the expiration time, of the LT effective period 821a, with reference to the LT effective period 821a of the target LT 80a. When the present time has passed the end time of the LT effective period 821a, it goes on to the processing in 51503. When the present time has not yet passed the end time of the LT effective period 821a, it goes on to S1502.

S1502: When the present time has not yet passed the end time of the LT effective period 821a (No in S1501), the LT update unit 306a judges, with reference to the permitted number of reproductions 822a of the target LT 80a, whether the value thereof is "0" or not. When the value of the permitted number of reproductions 822a is not "0", the LT 80a can still be used. In this case, the processing is ended without returning nor deleting the LT 80a. On the other hand, when the value of the permitted number of reproductions 822a is "0", it goes on to S1503.

S1503: The return flag judgment unit 307a judges whether the LT 80a needs to be returned to the right management server 20a or not with reference to the return flag 813a of the target LT 80a.

To be more specific, when the return flag 813a is set to "Return required", the return flag judgment unit 307a judges that the LT 80a needs to be returned to the right management server 20a, and when the return flag 813a is set to "No return required", it judges that the LT 80a does not need to be returned to the right management server 20a.

S1504: When it is judged in S1503 that the LT 80a needs to be returned to the right management server 20a, the LT return process of returning the LT 80a to the right management server 20a is executed.

S1505: When it is judged in S1503 that the LT 80a does not need to be returned to the right management server 20a, the LT update unit 306a deletes the LT 80a from the LT database 302a.

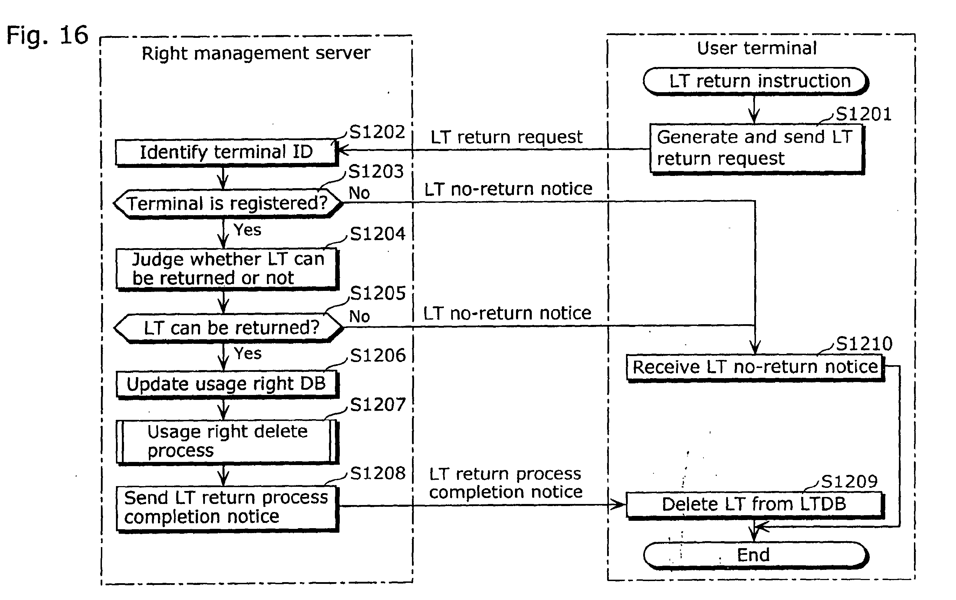

Next, the operation executed by the user terminal 30a when returning the LT 80a to the right management server 20a (LT return process) in the digital content distribution system in the first embodiment will be explained with reference to a flowchart in Fig. 16.

Fig. 16 is a flowchart showing the operation of the LT return process.

S1201: Upon receipt of the LT return instruction from the user β via the GUI 313, the LT return unit 305a generates a LT return request 90a in response to the LT return instruction from the user β and sends the generated LT return request 90a to the right management server 20a via the communication unit 312.

This LT return instruction from the user β includes information specifying a LT 80a which the user β wants to return (a usage right ID 811a, for example). On a menu screen as shown in Fig. 12, for example, the user β clicks a "Return LT" button 55a, and selects one LT 80a which he wants to return from among the LTs 80a stored in the LT database 302a displayed in a list form on the LT return menu screen not shown here which is activated by the click, and thus this LT return instruction is generated. According to this LT return instruction, a terminal ID stored in the terminal ID storage unit 303a is set as a terminal ID 92 in the LT return request 90a generated by the LT return unit 305a, and a LT identified by the LT return instruction from the user β is set as a LT 93a, respectively.

Note that when sending the LT return request 90a, the communication unit 312 of the user terminal 30a and the communication unit 28 of the right management server 20a establish an SAC.

S1202: Upon receipt of the LT return request 90a, the user identification unit 23 of the right management server 20a identifies the terminal ID 92 included in the LT return request 90a. It means that the user identification unit 23 identifies the user β (user ID) who wants to return the LT 80a based on the terminal ID 92 included in the LT return request 90a with reference to the user information database 21.

S1203: After identifying the terminal ID, the user identification unit 23 judges whether the terminal is registered or not, namely, whether the terminal ID is stored in the user information database 21 or not, with reference to the user information database 21. When the terminal ID included in the LT return request 90a is not stored in the user information database 21 (No in S1203), the user identification unit 23 considers the user as an unauthorized user for this digital content distribution system 1a and notifies the user terminal 30a that the LT cannot be issued. On the other hand, when the terminal ID included in the LT return request 90a is stored in the user information database 21 (Yes in S1203), the user identification unit 23 acquires the user ID associated with the terminal ID and passes the user ID to the LT analysis unit 26a.

S1204: Upon receipt of the user ID of the user β from the user identification unit 23, the LT analysis unit 26a judges whether the LT included in the LT return request 90a can be returned or not with reference to the usage right database 22a. To be more specific, the LT analysis unit 26a first analyzes the LT in the LT return request 90a and retrieves the usage right ID included in the LT. Then, the LT analysis unit 26a examines, with reference to the usage right database 22a, whether the user β identified in 51202 holds the usage right 222a identified with the usage right ID which has been retrieved just before. When the user β holds the usage right 222a as a result of the examination, the LT analysis unit 26a judges that the LT can be returned. On the other hand, when the user β does not hold it, the LT analysis unit 26a judges that the LT cannot be returned because there is nothing to be returned.

S1205: When it is judged that the LT cannot be returned in S1204, the LT analysis unit 26a notifies the user terminal 30a that the LT cannot be returned. On the other hand, when it is judged in S1204 that the LT can be returned, it goes on to S1206.

S1206: The LT analysis unit 26a analyzes the LT 80a included in the LT return request 90a, and retrieves the permitted number of reproductions 822a included in the LT 80a. The usage right update unit 27a performs the processing of incrementing the permitted number of reproductions 2226a of the usage right 222a identified by the usage right ID 2221a retrieved by the LT analysis 26a in S1204 by the value of the permitted number of reproductions 822a retrieved by the LT analysis unit 26a, and decrementing the number of issued LTs 2228a of the usage right 222a by "1". This processing increases the permitted number of reproductions 2226a and thus allows an issue of a new LT 80a with a renewed effective period, or decreases the number of issued LTs 2228a to be less than the permitted number of LT issues 2227a and thus allows an issue of a LT 80a and a shared use of the LT 80a between a plurality of terminals owned by the user β.

S1207: After the usage right database 22a is updated, the usage right delete process of deleting the usage right 222a updated in S1206 from the usage right database 22a is executed when it can be deleted.

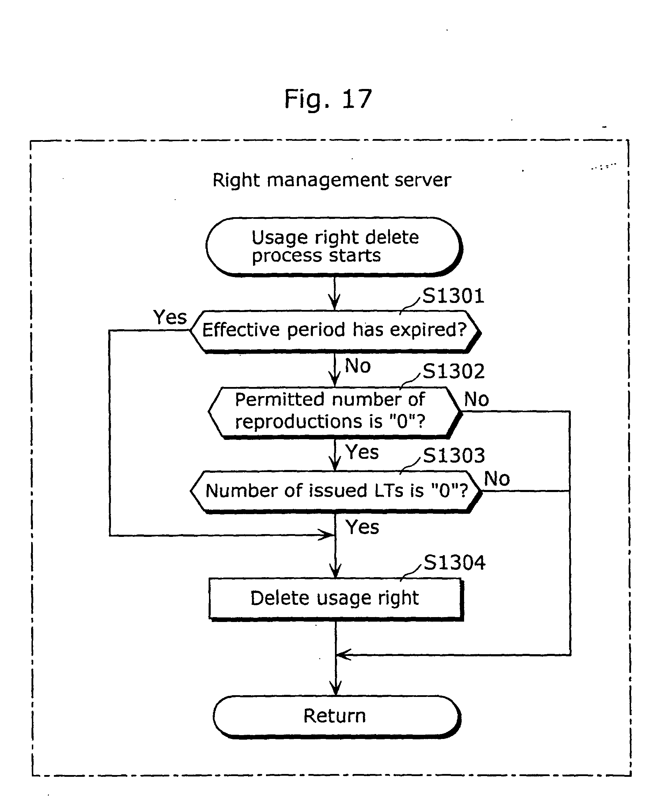

Fig. 17 is a flowchart showing the subroutine of the usage right delete process as shown in Fig. 16. Note that the usage right delete process is a process of maintaining or deleting an updated usage right when a LT 80a is returned from the user terminal 30a to the right management server 20a.

S1301: The usage right update unit 27a examines whether the present time has passed the end time of the usage right effective period 2224a or not with reference to the usage right effective period 2224a of the usage right 222a which is a candidate for deletion. When the present time has passed the end time of the usage right effective period 2224a, the usage right 222a is unnecessary, so it goes on to S1304 to delete the usage right 222a. When the present time has not yet passed the end time of the usage right effective period 2224a, it goes on to 51302.

S1302: The usage right update unit 27a judges, with reference to the permitted number of reproductions 2226a of the usage right 222a which is a candidate for deletion, whether the value thereof is "0" or not. When the value of the permitted number of reproductions 2226a is not "0", the usage right 222a can still be used, so the usage right 222a cannot be deleted. In this case, the processing is ended without deleting the usage right 222a. When the value of the permitted number of reproductions 2226a is "0", it goes to S1303.

S1303: The usage right update unit 27a examines the number of issued LTs 2228a of the usage right 222a which is a candidate for deletion to judge whether the value thereof is "0" or not. When the value of the number of issued LTs 2228a is not "0", there is a possibility that the LT 80a is returned under the usage right 222a, so the usage right 222a cannot be deleted. In this case, the processing is ended without deleting the usage right 222a. When the value of the number of issued LTs is "0", the value of the permitted number of reproductions 2226a is "0" and there is no possibility that the LT 80a is returned under the usage right 222a, so the usage right 222a may be deleted. In this case, it goes on to S1304 to delete the usage right 222a.

S1304: The usage right update unit 27a deletes the usage right 222a which is a candidate for deletion from the usage right database 22a, and returns to the main routine as shown in Fig. 16.

S1208: After the usage right update unit 27a completes the usage right delete process, the communication unit 28 sends a LT return process completion notice to the user terminal 30a.

S1209: The LT return unit 305a of the user terminal 30a receives the LT return process completion notice sent in S1208, via the communication unit 312, and deletes the LT 80a which is to be returned from the LT database 302a. Then, the LT return unit 305a notifies the user β via the GUI 313 that the return of the LT 80a is completed, and ends the processing.

S1210: Note that when it is judged that the LT cannot be issued in S1203 or S1205, the LT return unit 305a receives a LT no-return notice from the right management server 20a. In this case, the LT return unit 305a notifies the user β via the GUI 313 that the LT 80a could not be returned, and ends the processing. As described above, according to the first embodiment, not only the load on the user terminal can be reduced, but also the server apparatus is accessed with a higher frequency because of a return of license information and a request for license information issue and thus it can meet demand for various types of services for content usage. In addition, management of content usage right of each user under the right management server allows a renewal of the effective period and a shared use of the usage right on a plurality of terminals owned by the user.

Note that it has been explained on the assumption that a LT itself is described in the LT return request 90a, but the entire LT does not always need to be described but only a minimal and essential part of the LT, such as only the LT usage rule 82a, may be described.

Also, in the present embodiment, the usage rule is assumed as the number of uses, but it may be any other usage rule such as cumulative usage time.

Furthermore, in the first embodiment, only the desired number of reproductions is stored in the LT issue request 70a. However, it may be structured so that capability information indicating capability of a terminal apparatus which is involved in control of content usage (for example, information indicating whether the terminal apparatus is equipped with a secure clock, or information indicating whether it is equipped with a means for storing onto a secure recording medium) is sent to the right information management server apparatus together with the desired number of reproductions, and the right information management server sends a license ticket to the terminal apparatus by including license ticket status information instructing how to handle the license ticket on a user terminal (for example, a flag indicating that the license ticket must be consumed immediately without being written onto a recording medium) into the license ticket in accordance with the capability indicated in the capability information sent from the user terminal.

### (Second Embodiment)

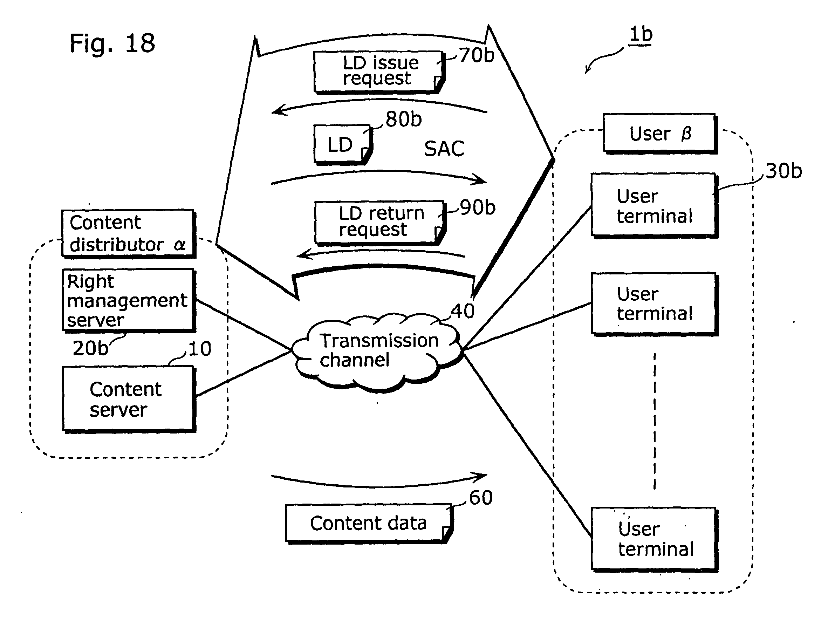

Fig. 18 is a block diagram showing an overview of a configuration of a digital content distribution system 1b in a second embodiment of the present invention.

As shown in Fig. 18, the digital content distribution system 1b is, as is the case of the digital content distribution system 1a, a system for protecting copyrights on content by distributing digital works (contents) encrypted by a content distributor α who is involved in content distribution to a user β, or distributing based on the user's request license data 80b (hereinafter also referred to as "LD") which allows content usage, out of original license data representing the usage right managed by the content distributor α for every content purchased by the user β, so that the user can use the content within the limits of usage rule included in the LD. The digital content distribution system 1b includes at least one content server 10, at least one right management server 20b, at least one user terminal 30b and a transmission channel 40 for connecting the content server 10, the right management server 20b and the user terminal 30b so as to communicate with each other.

The right management server 20b is a computer apparatus which is also placed on the content distributor α side, as with the content server 10, and manages content license data for the user β who receives content distribution service. More specifically, the right management server 20b manages the original license data for each content purchased by the user β so as to distribute the original license data managed by the right management server 20b, a part or a whole of the license data, the content decryption key and others as LD80b to the user terminal 30b in response to a LD issue request 70b from the user terminal 30b, or receives a LD return request 90b including the LD, an identifier indicating the return of the LD and the like from the user terminal 30b to update the license data.

The user terminal 30b is a computer apparatus which is placed on the user β side and receives content distribution service. More specifically, the user terminal 30b sends a content distribution request to the content server 10 to receive distribution from the content server 10. Or, it sends a LD issue request 70b to the right management server 20b for using the content and receives the LD 80b so as to reproduce the content within the limits of the usage rule included in the LD 80b, or sends a LD return request 90b to the right management server 20b.

By the way, the digital content distribution system 1a in the first embodiment is structured so that the right management server 20a cuts out a part or a whole of the usage rule from the usage right 222a to issue a LT 80a in response to the LT issue request 70a, and the user terminal 30a reproduces a content within the limits of the usage rule of the LT 80a and updates the usage rule, and then returns the LT 80a whose usage rule is updated to the right management server 20a. On the other hand, the digital content distribution system 1b according to the second embodiment is significantly different in the following.

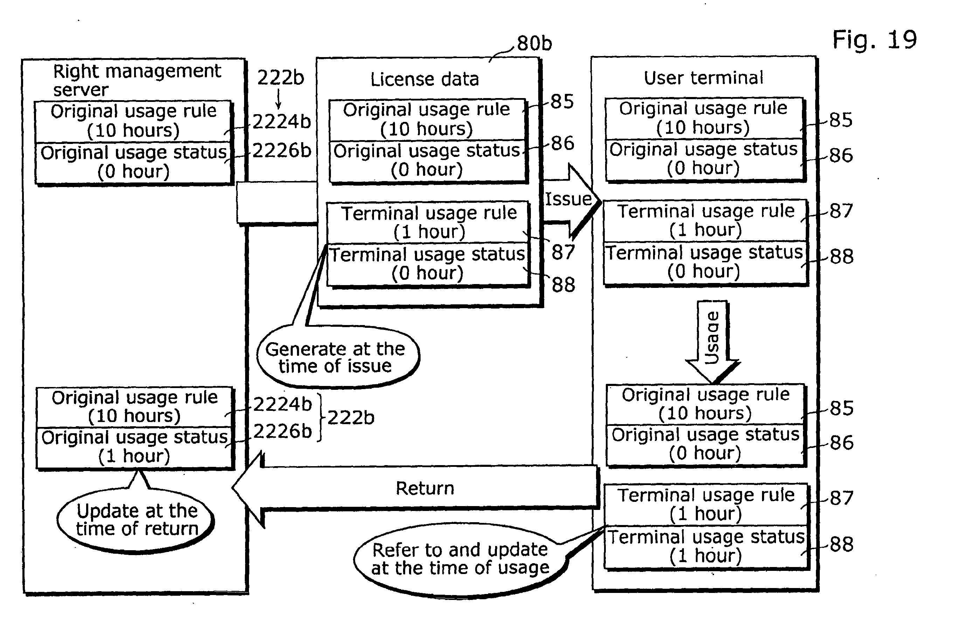

Fig. 19 is a diagram showing the structural features of the digital content distribution system 1b.

As shown in Fig. 19, the right management server 20b in the digital content distribution system 1b holds, as license data purchased by a user, an original usage rule 2224b (10 hours, for instance) and an original usage status 2226b indicating the usage status on the user terminal 30b. Upon receipt of the LD issue request 70b, the right management server 20b cuts out the whole of the original usage rule 2224b and the original usage status 2226b for LD 80b to be issued to the user terminal 30b which has sent this LD issue request 70b, namely, deletes the original usage rule 2224b and the original usage status 2226b from the license data database 22b temporarily. The right management server 20b generates a terminal usage rule 87 (1 hour, for instance) and a terminal usage status 88 (0 hour, for instance) based on a predetermined rule when issuing the LD 80b, and embeds them onto the LD 80b for its issue. In other words, the LD 80b is issued in a double-layer structure, with the original usage rule 85 and the original usage status 86, and the terminal usage rule 87 and the terminal usage status 88.

The user terminal 30b updates the details of the terminal usage status 88 by the amount of actual usage on the terminal indicated by the usage status, with reference only to the terminal usage rule 87 and the terminal usage status 88 of the LD 80b received from the right management server 20b when reproducing content. Note that the user terminal 30b never refers to the original usage rule 85 and the original usage status 86. Then, the user terminal 30b sends the LD 80b having a double-layer structure to the right management server 20b by a LD return request 90b.

Upon receipt of the LD return request 90b, the right management server 20b updates the original usage status by the usage amount on the terminal indicated by the usage status with reference to the terminal usage status 88 of the LD 80b, and stores again the original usage rule 2224b and the original usage status 2226b in the license data database under the management of the right management server 20b. Note that the remaining usage rule is obtained by subtracting the original usage status from the original usage rule.

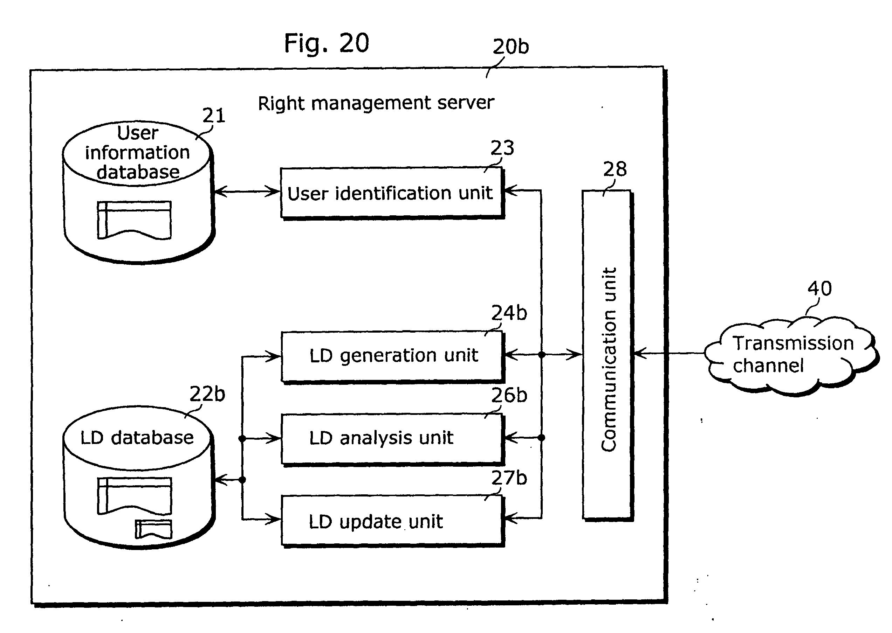

Fig. 20 is a functional block diagram showing the specific structure of the right management server 20b as shown in Fig. 18.

As shown in Fig. 20, the right management server 20b includes a user information database 21, a license data database 22b, a user identification unit 23, a LD generation unit 24b, a LD analysis unit 26b, a LD update unit 27b, a communication unit 28 and others.

The user information database 21 stores user information of users registered as members of this digital content distribution system 1b.

The license data database 22b is a database for managing license data 222b of content purchased by the user β. To be more specific, the license data database 22b is a database for managing information on remaining usage right (license) purchased by a user for each usage manner (for example, reproduction (playback), moving, copying, printing, usage period and the like). Note that this license data database 22b also stores a rule table 22c which is referred to for issuing LD 80b.

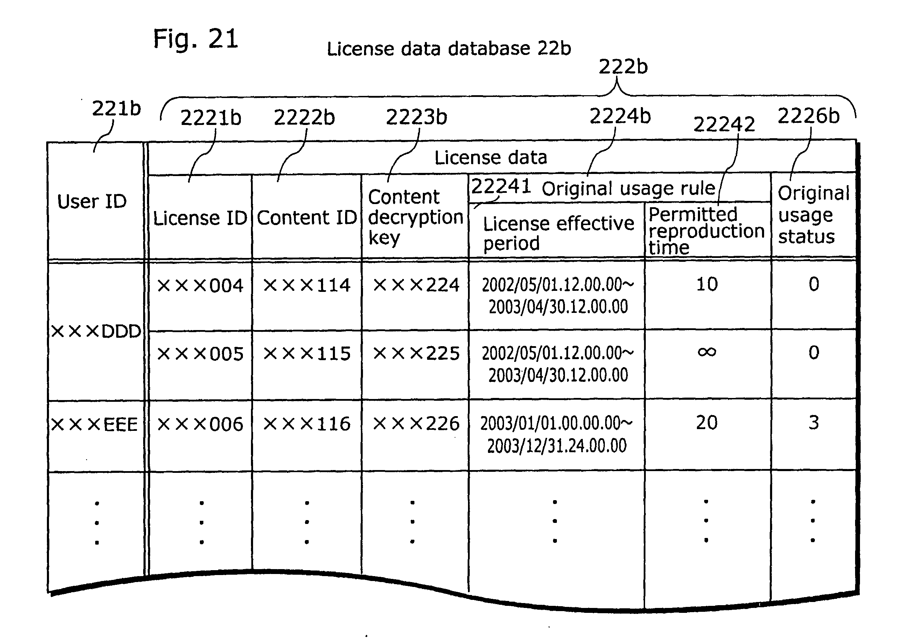

Next, the license data database 22b will be explained with reference to Fig. 21.

Fig. 21 is a diagram showing the specific structure of the license data database 22b as shown in Fig. 20.

As shown in Fig. 21, the license data database 22b includes a user ID 221b and license data 222b.

The license data 222b includes a license ID 2221b that is an ID of the license data 222b, a content ID 2222b of a content subject to the license data 222b, a content decryption key 2223b for decrypting the content, an original usage rule 2224b indicating an original usage rule purchased by a user, and an original usage status 2226b indicating the total usage status (for example, the cumulative usage time or the like) that is the user's actual use of the content.

The original usage rule 2224b includes a license effective period 22241 indicating the effective period of the license data 222b and permitted reproduction time 22242 indicating how long the content can be reproduced.

According to the license data database 22b structured as above, it can be determined whether a user holds a right to use a content or not based on whether the user ID and the license data 222b are stored in the license data database 22b or not, or the remaining usage rule for a terminal can be calculated based on the difference between the original usage rule 2224b and the original usage status 2226b.

The initial value of the original usage status 2226b is "0", LD 80b is issued from the right management server 20b to the user terminal 30b, and the LD 80b is updated according to the usage status on the user terminal 30b when it is returned from the user terminal 30b to the right management server 20b.

For example, Fig. 21 shows the case where a user β identified with a user ID 221b of "XXXDDD" owns two license data 222b identified with license IDs 2221b of "XXX004" and "XXX005". It also shows that the license data 222b with the license ID 2221b of "XXX004" is a right to a content identified with a license ID 2221b of "XXX114", a content decryption key 2223b for decrypting the content is "XXX224", the license effective period 22241 of the original usage rule 2224b is "2002/05/01.12.00.00 ∼ 2003/04/30.12.00.00", the permitted reproduction time for the content is "10 hours", and the original usage status 2226b is "0" (unused).

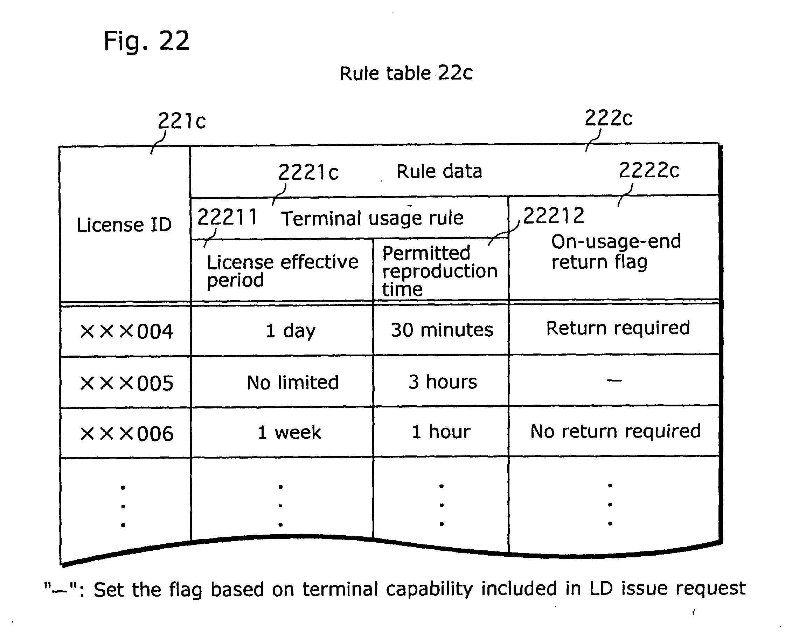

Fig. 22 is a diagram showing the specific structure of the rule table 22c held by the license data database 22b as shown in Fig. 20.

As shown in Fig. 22, the rule table 22c includes a license ID 221c and rule data 222c. The rule data 222c includes a terminal usage rule 2221c (license effective period and permitted reproduction time) and an on-usage-end return flag 2222c. The terminal usage rule 2221c includes a license effective period 22211 indicating an effective period of license data to be issued to the user terminal 30b and permitted reproduction time 22212.

Here, the license effective period 22211 is, as is the case of the above-mentioned license effective period limit 2225a, information for basically making license data shorter than the effective period of the user's own right. To be more specific, the license effective period 22211 is the maximum period for which the right may be used on the user terminal 30b after the right management server 20b issued the right. For example, the period shorter than the license effective period 22241, such as 1 day, 2 days and 1 week, is set, or no limited, namely, the same period as the license effective period 22241 is set. This license effective period 22211 set by a content distributor α allows change of levels for keeping track of access frequency.

The permitted reproduction time 22212 is information set by the content distributor α based on the time required for content reproduction.

Also, the on-usage-end return flag 2222c is information set by the content distributor α to indicate whether the LD 80b should be returned or not when the usage of the content ends.

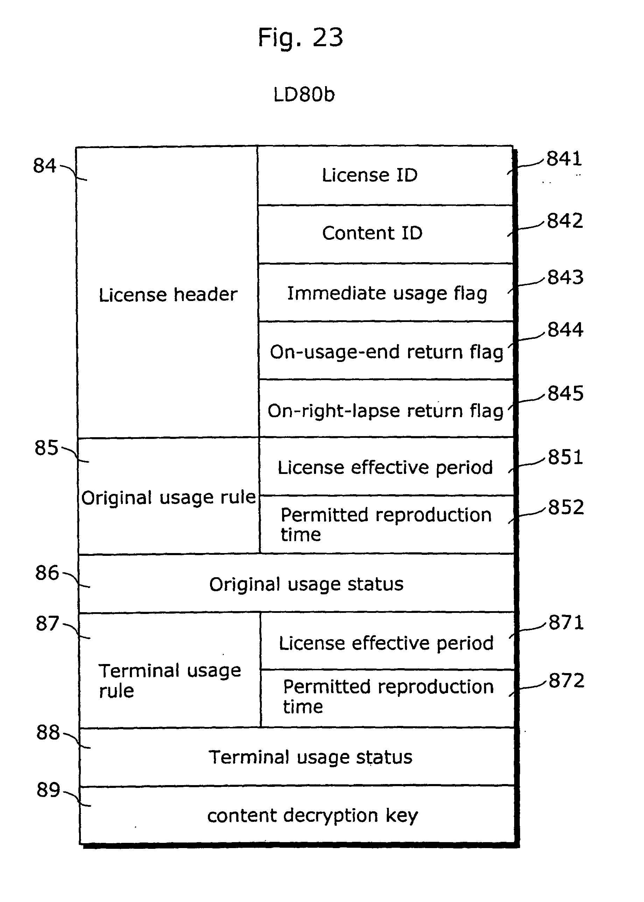

The LD generation unit 24b is a means for generating LD 80b as shown in Fig. 23 from the license data 222b under the management of the license data database 22b.

Fig. 23 is a diagram showing the specific structure of LD 80b generated by the LD generation unit 24b.

As shown in Fig. 23, LD 80b includes a license header 84, an original usage rule 85, an original usage status 86, a terminal usage rule 87, a terminal usage status 88 and a content decryption key 89.

The license header 84 includes a license ID 841, a content ID 842, an immediate usage flag 843, an on-usage-end return flag 844 and on-right-lapse return flag 845.

In the license ID 841, a license ID 2221b of license data 222b which is the source of issuing LD 80b is stored.

In the content ID 842, a content ID of a content which can be reproduced using LD 80b is stored.

In the immediate usage flag 843, a flag indicating whether the content should be reproduced immediately or not using this LD 80b is stored.

The on-usage-end return flag 844 is a flag which is paired with the immediate usage flag 843, and in this on-usage-end return flag 844, a flag indicating whether the LD 80b should be returned when the usage of the LD 80b ends is stored based on the rule table 22c.

In the on-right-lapse return flag 845, information indicating whether the LD 80b needs to be returned to the right management server 20b or not when the usage right lapses on the terminal is stored.

The original usage rule 85 includes a license effective period 851 and permitted reproduction time 852. In the license effective period 851, the details of the license effective period 22241 in the original usage rule 2224b stored in the LD database 22b are stored as they are. In the permitted reproduction time 852, the details of the permitted reproduction time 22242 in the original usage rule 2224b are stored as they are.

In the original usage status 86, the details of the original usage status 2226b stored in the LD database 22b, namely, the status of actual past usage on the user terminal 30b, are stored as they are.

The terminal usage rule 87 includes a license effective period 871 and a permitted reproduction time 872.

In the license effective period 871, the period for which the LD 80b is effective is stored.

In the permitted reproduction time 872, the cumulative time for which the content can be reproduced is stored.

In the terminal usage status 88, the cumulative time of actual reproductions of the content using this LD 80b on the user terminal 30b is stored.

In the content decryption key 89, a key for decrypting content is stored.

Here, it is when the maximum of the remaining usage rule which is calculated from the original usage rule 2224b and the original usage status 2226b is not included in the terminal usage rule that the LD generation unit 24b sets the on-right-lapse return flag 845 to "Return required". More specifically, it sets to "Return required" when at least one of the following are true:
1. A value obtained by subtracting an original usage status from permitted reproduction time in an original usage rule is larger than (>) a value of permitted reproduction time in a terminal usage rule, and
2. An expiration time of a license effective period of a terminal usage rule is set earlier than an expiration time of a license effective period of an original usage rule.

On the contrary, when the maximum of the remaining usage rule is included in the terminal usage rule, namely, when the value obtained by subtracting the original usage status from the permitted reproduction time in an original usage rule is equal to (=) the value of the permitted reproduction time in the terminal usage rule and the expiration time of the license effective period of the terminal usage rule is same as the expiration time of the license effective period of the original usage rule, the LD generation unit 24b sets the on-right-lapse return flag 845 to "No return required".

The LD 80b is sent from the right management server 20b to the user terminal 30b, and the user terminal 30b reproduces a content using this LD 80b, and determines whether the LD 80b is to be returned to the right management server 20b or not based on the on-usage-end return flag 844 and the on-right-lapse return flag 845.

The LD analysis unit 26b is a means for analyzing the details of the LD 80b returned from the user terminal 30b.

The LD update unit 27b updates the details of the license data 222b when the LD 80b is issued to the user terminal 30b or returned from the user terminal 30a. The details of the update will be explained later.

The communication unit 28 communicates with the user terminal 30b via the transmission channel 40. To be more specific, the communication unit 28, which is a communication interface for communicating with the user terminal 30b via the transmission channel 40, analyzes a request such as a LD issue request 70b and a LD return request 90b sent from the user terminal 30b, requests the user identification unit 23, the LT generation unit 24b, the LD update unit 27b to perform processing depending upon the analysis result, distributes the LD 80b generated by the LD generation unit 24b to the user terminal 30b, or carries out cipher communication with the user terminal 30b via the SAC established between them after encrypting the above request or response with a session key.

Next, the specific structure of the user terminal 30b will be explained.

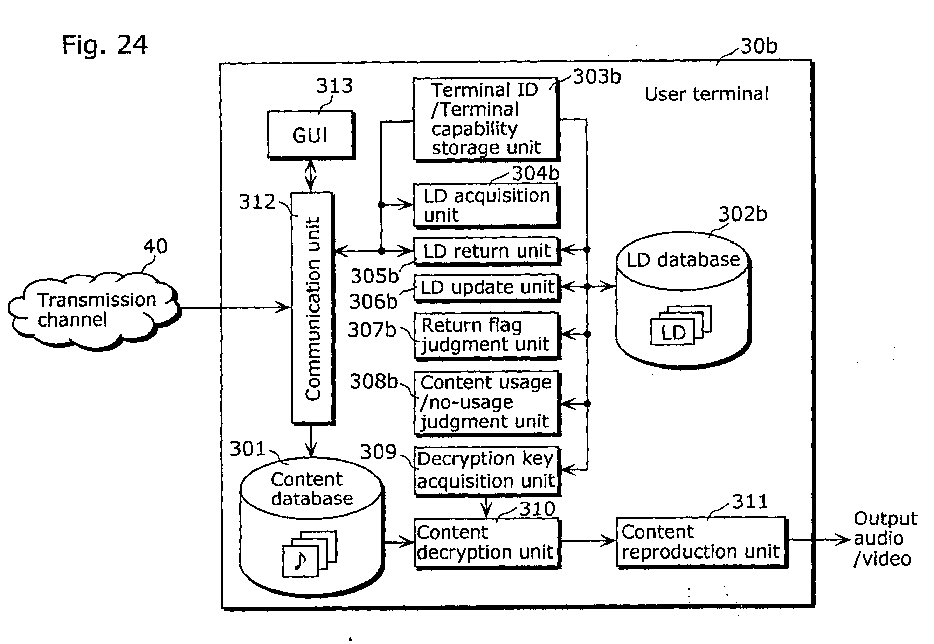

Fig. 24 is a functional block diagram showing the specific structure of the user terminal 30b as shown in Fig. 18.

In Fig. 24, the user terminal 30b includes a content database 301, a LD database 302b, a terminal ID/terminal capability storage unit 303b, a LD acquisition unit 304b, a LD return unit 305b, a LD update unit 306b, a return flag judgment unit 307b, a content usage/no-usage judgment unit 308b, a decryption key acquisition unit 309, a content decryption unit 310, a content reproduction unit 311, a communication unit 312, and a GUI 313.

The content database 301 is a database for managing the content data 60 distributed from the content server 10.

The LD database 302b is a secure database for managing LD 80b issued from the right management server 20b. The terminal ID/terminal capability storage unit 303b stores not only the terminal ID for identifying the user terminal 30b uniquely, but also stores in advance the capability of the user terminal 30b, such as whether the user terminal 30b has a secure clock and whether the LD database 302b can securely store data.

The LD acquisition unit 304b is a means for acquiring the LD 80b from the right management server 20b.

The LD acquisition unit 304b acquires the LD 80b by generating a LD issue request 70b and sending it to the right management server 20b.

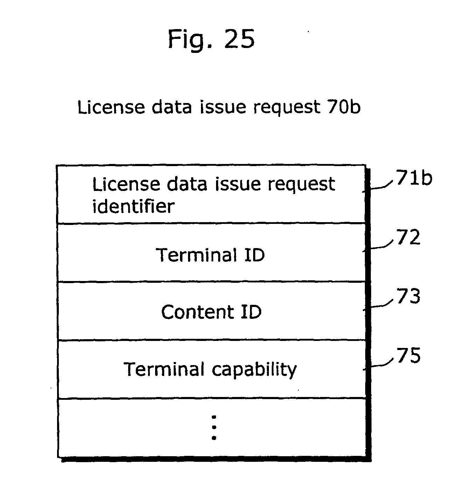

Fig. 25 is a diagram showing the specific structure of the LD issue request 70b generated by the LD acquisition unit 304b.

In Fig. 25, the LD issue request 70b includes a LD issue request identifier 71b, a terminal ID 72, a content ID 73 and a terminal capability 75.

In the LD issue request identifier 71b, information indicating that this data is a LD issue request 70b is described.

In the terminal ID 72, the terminal ID of the user terminal 30b which sends the LD issue request 70b is described.

In the content ID 73, the content ID of the content which is reproduced using the LD 80b to be acquired is described.

In the terminal capability 75, the terminal capability which is stored in advance in the terminal ID/terminal capability storage unit 303b is stored.

The LD return unit 305b is a means for returning LD 80b to the right management server 20b.

The LD return unit 305b returns the LD 80b by generating a LD return request 90b and sending it to the right management server 20b.

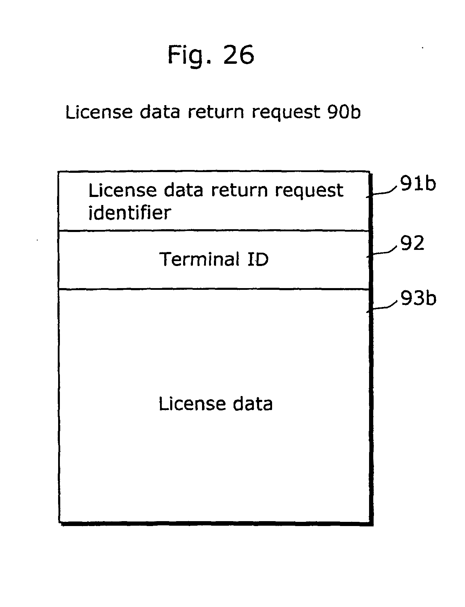

Fig. 26 is a diagram showing the specific structure of the LT return request 90b generated by the LD return unit 305b.

In Fig. 26, the LD return request 90b includes a LD return request identifier 91b, a terminal ID 92 and LD 93b.

In the LD return request identifier 91b, information indicating that this data is a LD return request 90b is described.

In the terminal ID 92, the terminal ID of the user terminal 30b, which is stored in the terminal ID/terminal capability storage unit 303b, for sending the LD return request 90b is described.

In the LD 93b, the LD to be returned is described as it is.

The LD update unit 306b is a means for updating the details of the LD 80b. To be more specific, the LD update unit 306b performs processing of incrementing the value of the terminal usage status 88 in the LD 80b by the time of actual reproduction after reproducing a content.

The return flag judgment unit 307b is a means for judging whether the LD 80b needs to be returned to the right management server 20b or not with reference to the on-usage-end return flag 844 and the on-right-lapse return flag 845 in the LD 80b.

The content usage/no-usage judgment unit 308b judges whether the content can be reproduced or not with reference to the license effective period 871 and the permitted reproduction time 872 and the terminal usage status 88 in the LD 80b.

The content usage/no-usage judgment unit 308b judges that the content can be reproduced when the present time is within the license effective period 871 and the value of the terminal usage status 88 is less than the permitted reproduction time 872. Note that it is assumed that the user terminal 30b has a clock function so that the content usage/no-usage judgment unit 308b can acquire the present time.

Note that when the user terminal 30a does not have a clock function, the user terminal 30a may be structured so as to judge whether the content can be reproduced or not based on the permitted reproduction time 872 in the LD 80b by overriding the license effective period 871, or judge that the content cannot be reproduced unconditionally.

The decryption key acquisition unit 309 is a means for acquiring a content decryption key for decrypting a content.

The content decryption unit 310 is a means for retrieving a content from the content database 301 and decrypting the encrypted content 62 using the content decryption key 89 acquired by the decryption key acquisition unit 309.

The content reproduction unit 311 is a means for reproducing the content decrypted by the content decryption unit 310, and music and video is outputted from a speaker or a display thereof not shown in the figures.

The communication unit 312 is a means for communicating with the content server 10 and the right management server 20b via the transmission channel 40. To be more specific, the communication unit 312 is a communication interface that communicates with the content server 10 and the right management server 20b via the transmission channel 40, and analyzes responses such as content data 60 sent from the content server 10 and LD 80b sent from the right management server 20b, requests the content database 301, the LD acquisition unit 304b and the GUI 313 to perform processing depending upon the analysis result, sends the LD issue request 70a generated by the LD acquisition unit 304b and the LD return request 90a generated by the LD return unit 305b to the right management server 20b, or carries out cipher communication with the right management server 20b via the SAC established between them after encrypting the above-mentioned requests and responses with a session key.

The GUI 313 is a user interface utilizing a graphics function of a computer.

Next, the operation of the digital content distribution system 1b will be explained.

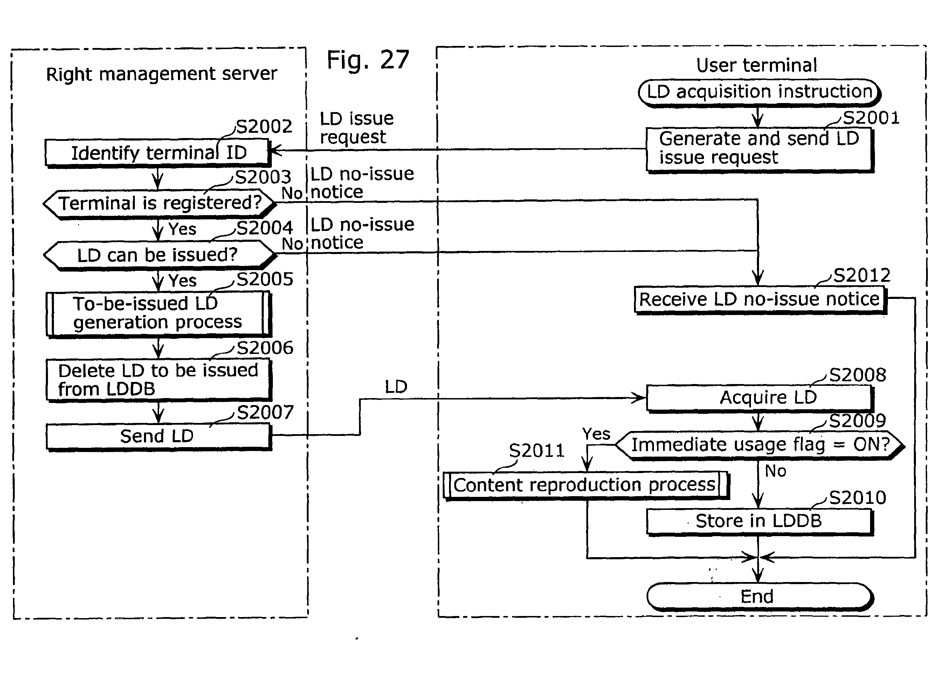

First, a LD acquisition process in which the user terminal 30b acquires LD 80b from the right management server 20b in the digital content distribution system 1b in the second embodiment will be explained with reference to a flowchart in Fig. 27.

Fig. 27 is a flowchart showing the operation of the LD acquisition process.

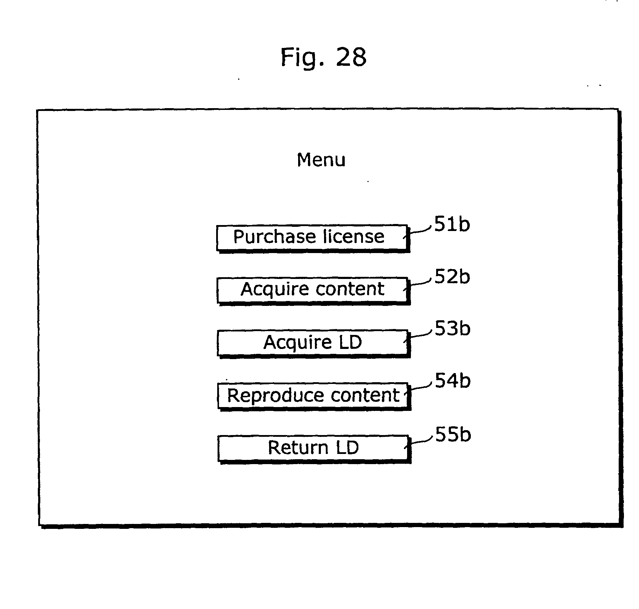

On a menu screen as shown in Fig. 28, for example, when the user β clicks an "Acquire LD" button 53b, and acquires LD from among the content data stored in the content database 301 displayed in a list form on the LD acquisition screen not shown here which is activated by the click to select the content data which he wants to reproduce, the LD acquisition instruction including the content ID of the selected content data is inputted to the LD acquisition unit 304b via the GUI 313, and thus the LD acquisition process is executed.

Upon receipt of the LD acquisition instruction from the user β via the GUI 313, the LD acquisition unit 304b generates a LD issue request 70b and sends it to the right management server 20b via the communication unit 312 (S2001).

Here, a terminal ID pre-stored in the terminal ID/terminal capability storage unit 303b is set as the terminal ID 72 in the LD issue request 70b sent to the right management server 20b, a content ID included in the LD acquisition instruction from the user β is set as the content ID 73, and a terminal capability pre-stored in the terminal ID/terminal capability storage unit 303b is set as the terminal capability 75.

Upon receipt of the LD issue request 70b via the communication unit 28, the user identification unit 23 of the right management server 20b identifies the terminal ID included in the received LD issue request 70b (S2002). After the identification of the terminal ID, the user identification unit 23 judges whether the terminal ID of the user terminal 30b used by the user β who wants the LD 80b to be issued is stored in the user information database 21 or not with reference to the user information database 21 (S2003).

When the terminal ID included in the LD issue request 70b is not stored in the user information database 21 as a result of the judgment (No in S2003), that is, when the user β cannot be identified, the user identification unit 23 considers the user β as unauthorized user for this digital content distribution system 1b and notifies the user terminal 30b that the LD cannot be issued. On the other hand, when the terminal ID included in the LD issue request 70b is stored in the user information database 21 (Yes in S2003), the user identification unit 23 acquires the user ID associated with the terminal ID and notifies the LD generation unit 24b of the acquired user ID.

Upon receipt of the user ID from the user identification unit 23, the LD generation unit 24b judges with reference to the license data database 22b whether the license data 80b can be issued or not (S2004). This judgment is actually made based on the judgment of whether the user ID notified by the user identification unit 23 is stored in the license data database 22b or not, or the judgment of whether the user β owns the license data 222b which is effective for the content identified with the content ID 73 included in the LD issue request 70b. To be more specific, the LD generation unit 24b first judges whether the user ID notified from the user identification unit 23 is stored in the license data database 22b or not. When the notified user ID is stored, the LD generation unit 24b judges whether the license data including the content ID included in the LD issue request 70b is stored or not.

In the case where the license data is stored and the terminal capability included in the LD issue request 70b indicates that the terminal does not have a secure clock, when the present time is within the license effective period 22241 and a value obtained by subtracting the original usage status 2226b from the permitted reproduction time 22242 is larger than 0, namely, the permitted reproduction time remains, the LD generation unit 24b judges that the LD can be issued. Also, in the case where the license data is stored and the terminal capability indicates that the terminal has a secure clock, when the present time is earlier than the expiration time of the license effective period 22241 and the permitted reproduction time remains, the LD generation unit 24b judges that the LD can be issued. In other cases, the LD generation unit 24b judges that the LD cannot be issued.

When it is judged that the LD cannot be issued (No in S2004), the LD generation unit 24b considers that the user is an authorized user for this digital content distribution system 1b but there exists no license data which is to be issued, and notifies the user terminal 30b that the LD cannot be issued. In other words, in any of the cases where the user ID notified from the user identification unit 23 is not stored in the license data database 22b, the license data including the content ID included in the LD issue request 70b is not stored, the present time is out of the license effective period 22241, and no permitted reproduction time remains, the LD generation unit 24b notifies the user terminal 30b that the LD cannot be issued.

On the other hand, when it is judged that the LD can be issued (Yes in S2004), the LD generation unit 24b executes the to-be-issued LD generation process of generating the LD 80b to be issued to the user terminal 30b which sends the LD issue request 70b. More specifically, when the user ID notified from the user identification unit 23 is stored in the license data database 22b, the license data including the content ID included in the LD issue request 70b, the present time is within the license effective period 22241 and the permitted reproduction time remains, the LD generation unit 24b executes the to-be-issued LD generation process.

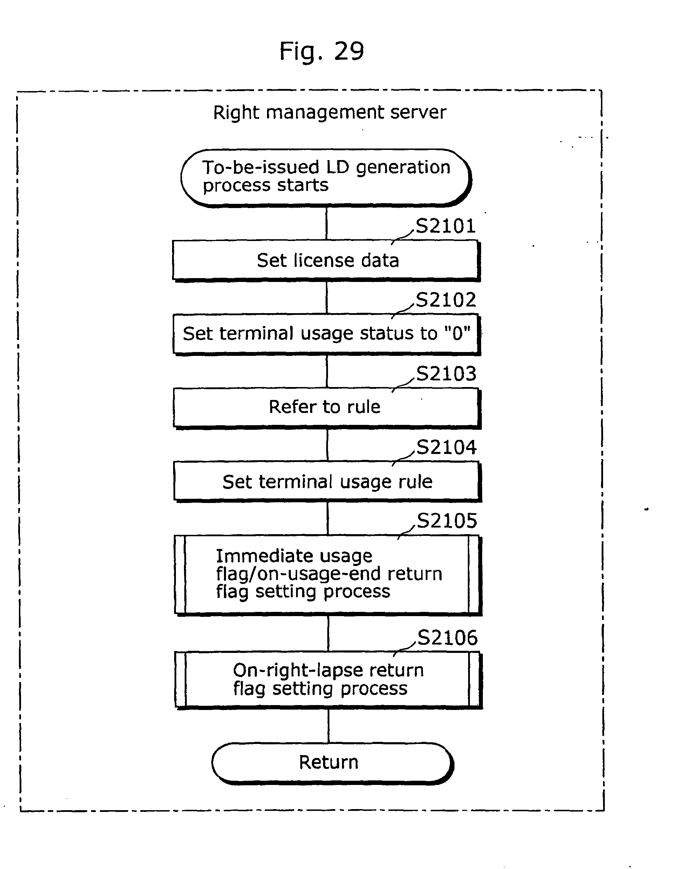

Fig. 29 is a flowchart showing the subroutine in the to-be-issued LD generation process (S2005) as shown in Fig. 27.

In this subroutine, the LD generation unit 24b first sets license data associated with the user ID which is read out from the license data database 22b as LD 80b to be issued (S2101). More specifically, the LD generation unit 24b stores the license ID and the content ID of the license data 222b respectively as the license ID 841 and the content ID 842 of the license header 84 of the LD 80b to be issued, stores the content decryption key of the license data 222b as the content decryption key 89 of the LD 80b, stores the original usage rule (license effective period and permitted reproduction time) of the license data 222b as the original usage rule 85 of the LD 80b, and stores the original usage status of the license data 222b as the original usage status 86 of the LD 80b.

Next, the LD generation unit 24b sets the terminal usage status 88 of the LD 80b to be issued to "0" (S2102).

Then, the LD generation unit 24b refers to the rule table 22c which has been explained using Fig. 22 (S2103), and sets the terminal usage rule as the terminal usage rule 87 of the LD 80b to be issued according to the referred rule (S2104).

After setting the terminal usage rule, the LD generation unit 24b executes the immediate usage flag/on-usage-end return flag setting process of setting the immediate usage flag 843 and the on-usage-end return flag 844 of the license header 84 of the LD 80b to be issued to predetermined values (S2105) and further executes the on-right-lapse return flag setting process of setting the on-right-lapse return flag 845 to a predetermined value (S2106) so as to generate the LD 80b to be issued, and then returns to the main routine as shown in Fig. 27.

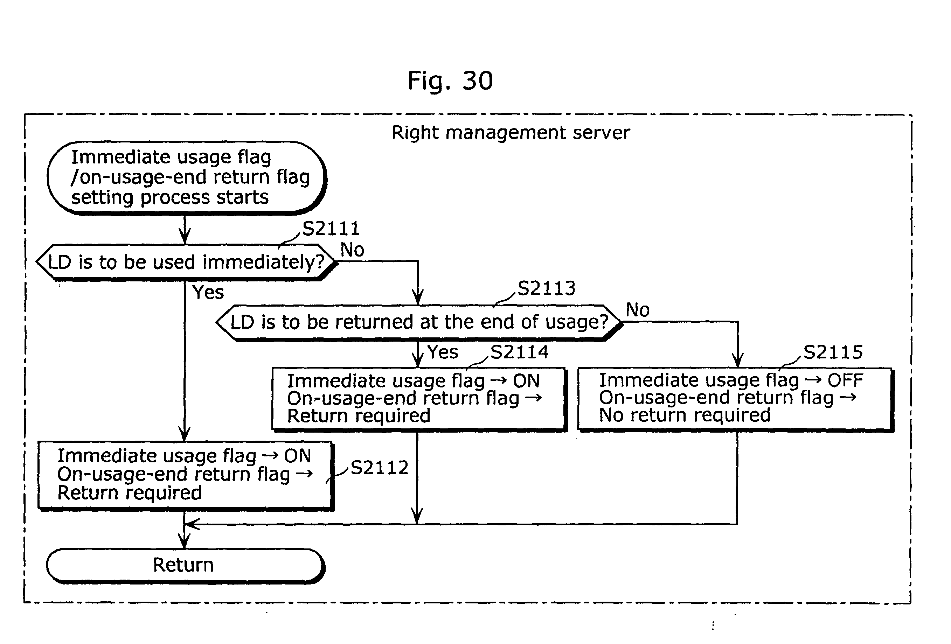

Fig. 30 is a flowchart showing the subroutine in the immediate usage flag/on-usage-end return flag setting process (S2105) as shown in Fig. 29.

The LD generation unit 24b first judges whether the LD to be issued should be used immediately or not (S2111). This judgment is made based on the terminal capability included in the LD issue request 70b, for example. When the LD 80b is used immediately because the terminal capability of the user terminal 30b indicates that it does not have a secure clock (Yes in S2111), the LD generation unit 24b sets the immediate usage flag to "ON", sets the on-usage-end return flag to "Return required" (S2112), and returns to the subroutine as shown in Fig. 29.

On the other hand, when the LD 80b does not need to be used immediately because the terminal capability of the user terminal 30b indicates that it has a secure clock (No in S2111), the LD generation unit 24b judges whether or not the LD should be returned at the end of the usage (S2113). This judgment is made based on the details of the on-usage-end return flag 2222c as shown in Fig. 22. When the LD is returned at the end of the usage (Yes in S2113), the LD generation unit 24b sets the immediate usage flag to "OFF", sets the on-usage-end return flag to "Return required" (S2114), and returns to the subroutine as shown in Fig. 29. On the other hand, when the LD is not returned at the end of the usage (No in S2113), the LD generation unit 24b sets the immediate usage flag to "OFF", sets the on-usage-end return flag to "No return required" (S2115), and returns to the subroutine as shown in Fig. 29.

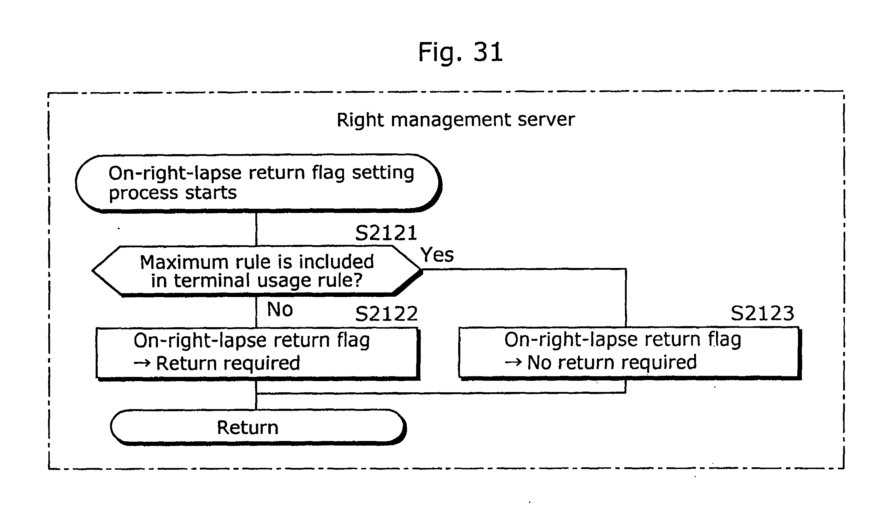

Fig. 31 is a flowchart showing the subroutine in the on-right-lapse return flag setting process (S2106) as shown in Fig. 29.

The LD generation unit 24b judges whether the maximum of the remaining usage rule calculated based on the original usage rule 2224b and the original usage status 2226b is included in the terminal usage rule or not (S2121). When the maximum of the remaining usage rule is not included in the terminal usage rule (No in S2121), the LD generation unit 24b sets the on-right-lapse return flag 845 of the LD 80b to "Return required" (S2122), and returns to the main routine as shown in Fig. 27. It sets the on-right-lapse return flag 845 to "Return required" in order to secure the way to reuse the usage right if the usage right remains because the LD 80b has a double-layer structure.

On the other hand, when the maximum of the remaining usage rule is included in the terminal usage rule (Yes in S2121), the LD generation unit 24b sets the on-right-lapse return flag 845 of the LD 80b to "No return required" (S2123), and returns to the main routine as shown in Fig. 27.

After generating the LD 80b to be issued as described above, the LD generation unit 24b deletes the license data to be issued from the license data database 22b (S2006). In other words, it deletes the license data which is the source of generating the LD 80b from the license data database 22b.

Note that the user ID associated with the license data to be deleted may be deleted together with the license data from the license data database 22b.

After deleting the license data, the LD generation unit 24b sends the generated LD 80b to the user terminal 30b via the communication unit 28 (S2007).

Note that the LD 80b is sent after deleting the license data here, but as a variation of the second embodiment, the LD 80b may be deleted after sending the LD 80b to the user terminal 30b and receiving a message from the user terminal 30b of its receipt of the LD 80b. In this case, LD 80b can be reissued securely even in a case where the LD 80b is corrupted in the middle of transmission thereof due to a failure of the transmission channel 40 or the like.

Upon receipt of the LD 80b sent from the right management server 20b via the communication unit 312 (S2008), the LD acquisition unit 304b of the user terminal 30b judges whether the immediate usage flag 843 is set to "ON" or not (S2009). When the immediate usage flag 843 is not set to "ON" as a result of the judgment (No in S2009), that is, when the immediate usage flag 843 is set to "OFF", the LD acquisition unit 403b stores the received LD 80b in the LD database 302b (S2010). After that, the LD acquisition unit 304b notifies the user β via the GUI 313 that the acquisition of the LD 80b is completed, and ends the LD acquisition process.

On the other hand, when the immediate usage flag 843 is set to "ON" as a result of the judgment (Yes in S2009), the LD acquisition unit 304b passes the received LD 80b to the content usage/no-usage judgment unit 308b without storing it in the LD database 302b, and causes the content usage/no-usage judgment unit 308b to execute the content reproduction process of reproducing the content associated with this LD 80b (S2011).

As a result, it is managed so that LD 80b is stored in the LD database 302b when the user terminal 30b has a secure clock and the acquired LD 80b is consumed immediately when it does not have a secure clock, and thus tampering of reproduction time or LD on the user terminal 30b can be prevented.

On the other hand, when it is judged in Step S2003 or S2004 that LD cannot be issued, the LD acquisition unit 304b receives a LD no-issue notice from the right management server 20b (S2012). In this case, the LD acquisition unit 304b notifies the user β via the GUI 313 that the LD 80b cannot be acquired, and ends the processing.

Note that the LD issue request 70b is sent via the SAC established between the communication unit 312 of the user terminal 30b and the communication unit 28 of the right management server 20b.

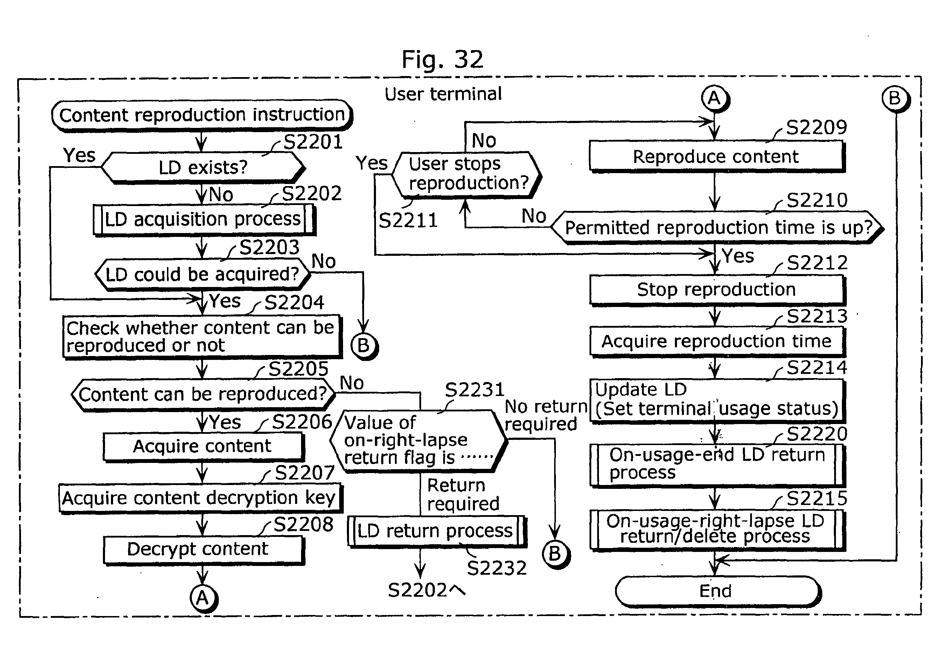

Next, a content reproduction process in which the user terminal 30b reproduces a content using LD 80b in the digital content distribution system 1b of the second embodiment will be explained with reference to the flowchart of Fig. 32.

Fig. 32 is a flowchart showing the operation of the content reproduction process.

On a menu screen as shown in Fig. 28, for example, when the user β clicks a "Reproduce content" button 54b, and selects one content which he wants to reproduce from among the content data 60 stored in the content database 301 displayed in a list form on the content reproduction menu screen not shown here which is activated by the click of the "Reproduce content" button 54b, the content reproduction instruction including the content ID of the selected content data is inputted to the LD acquisition unit 304b via the GUI 313, and thus the content reproduction process is executed.

Upon receipt of the content reproduction instruction from the user β via the GUI 313, the content usage/no-usage judgment unit 308b examines whether there exists the LD 80b associated with the content which the user β wants to reproduce in the LD database 302b or not (S2201).

When there exists no desired LD 80b in the LD database 302b, the content usage/no-usage judgment unit 308b passes the content ID to the LD acquisition unit 304b, causes the LD acquisition unit 304b to execute automatically the LD acquisition process which is similar to the LD acquisition process as shown in Fig. 27 (S2202), and judges whether the LD 80b could be acquired or not (S2203).

When it is judged that the the LD 80b could not be acquired (No in S2203), the content usage/no-usage judgment unit 308b notifies the user β via the GUI 313 that the content cannot be reproduced, and ends the content reproduction process.

On the other hand, either when there exists LD 80b in the LD database 302b (Yes in S2201) or when acquisition of the LD 80b is succeeded by executing the LD acquisition process (Yes in S2203), the content usage/no-usage judgment unit 308b judges with reference to the details of the LD 80b whether the content can be reproduced or not (S2205). This judgment is made with reference to the license effective period 871 and the permitted reproduction time 872 in the terminal usage rule 87, and the terminal usage status 88 in the LD 80b. To be more specific, the content usage/no-usage judgment unit 308b judges that the content can be reproduced when the present time is within the license effective period 871 and a value obtained by subtracting the value stored in the terminal usage status 88 from the value stored in the permitted reproduction time 872 (this value obtained by subtraction is hereinafter referred to also as "remaining terminal usage rule") is larger than "0". In other cases, namely, when the effective period of the LD 80b has expired or there is no remaining terminal usage rule, the content usage/no-usage judgment unit 308b judges that the content cannot be reproduced.

When it is judged that the content cannot be reproduced (No in S2205), the return flag judgment unit 307b judges whether the value of the on-right-lapse return flag is "Return required" or not (S2231). If the value is "No return required", the content usage/no-usage judgment unit 308b notifies the user β via the GUI 313 that the content cannot be reproduced, and ends the content reproduction process. On the contrary, if the value is "Return required", after executing the LD return process of returning the LD 80b to the right management server 20b (S2232), the LD return unit 305b returns to Step S2202. Such a case occurs when the effective period of the LD 80b has expired without reproducing the content or the like.

On the other hand, when the content usage/no-usage judgment unit 308b judges that the content can be reproduced (Yes in S2205), the content decryption unit 310 acquires the content which the user β wants to reproduce from the content database 301 (S2206). Also, the decryption key acquisition unit 309 acquires the content decryption key 89 from the LD 80b associated with the content which the user β wants to reproduce (S2207) and passes it to the content decryption unit 310.

Upon receipt of the content decryption key, the content decryption unit 310 decrypts the encrypted content acquired from the content database 301 with the content decryption key 89 (S2208), and the content reproduction unit 311 reproduces the content decrypted by the content decryption unit 310 (S2209).

After reproduction of the content starts, the LD update unit 306b judges whether the content reproduction time has reached the permitted reproduction time or not (S2210). This judgment is made based on the permitted reproduction time 872 in the terminal usage rule 87 in the LD 80b, the terminal usage status 88, and the reproduction time clocked by a secure timer. In other words, it is judged based on whether the total of the cumulative content reproduction time stored in the terminal usage status 88 and the reproduction time clocked by the timer has reached the value stored in the permitted reproduction time 872 or not.

When it has not reached the permitted reproduction time as a result of the judgment (No in S2210), the LD update unit 306b judges whether or not the user β instructed to stop the reproduction via the GUI 313 (S2211). When the user did not instruct to stop reproduction (No in S2211), the content reproduction unit 311 is allowed to reproduce the content.

When the user instructed to stop the reproduction (Yes in S2211) or when the reproduction time has reached the permitted reproduction time (Yes in S2210), the LD update unit 306b stops the content reproduction (S2212), and acquires the current reproduction time clocked by the timer (S2213). Then, the LD update unit 306b updates the details of the LD 80b used for reproducing the content (S2214). To be more specific, the LD update unit 306b sets as a terminal usage status 88 the cumulative value obtained by adding the current reproduction time clocked by the timer.

Once updating the LD, the LD return unit 305b executes the on-usage-end LD return process of returning the LD 80b to the right management server 20b (S2220), and the LD return unit 304b executes the on-usage-right-lapse LD return/delete process of returning the LD 80b which cannot be used for content reproduction to the right management server 20b or deleting the LD 80b from the LD database 302b (S2215), and ends the operation of the content reproduction process.

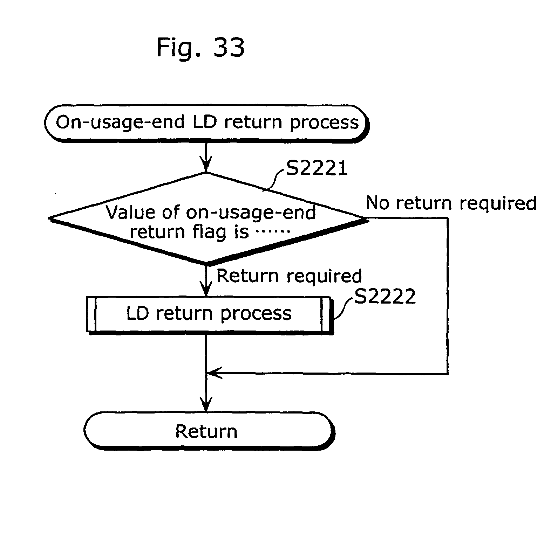

Next, the on-usage-end LD return process in S2220 in Fig. 32 will be explained with reference to a flowchart in Fig. 33.

Fig. 33 is a flowchart showing a subroutine of the on-usage-end LD return process (S2220) as shown in Fig. 32.

The return flag judgment unit 307b judges whether the value of the on-usage-end return flag 844 of the target LD 80b is "No return required" or "Return required" (S2221). When the value of the on-usage-end return flag 844 is "Return required", the LD return unit 305b executes the LD return process of returning the LD 80b to the right management server 20b automatically (S2222), and returns to the main routine. On the other hand, when the value of the on-usage-end return flag 844 is "No return required", it returns to the main routine.

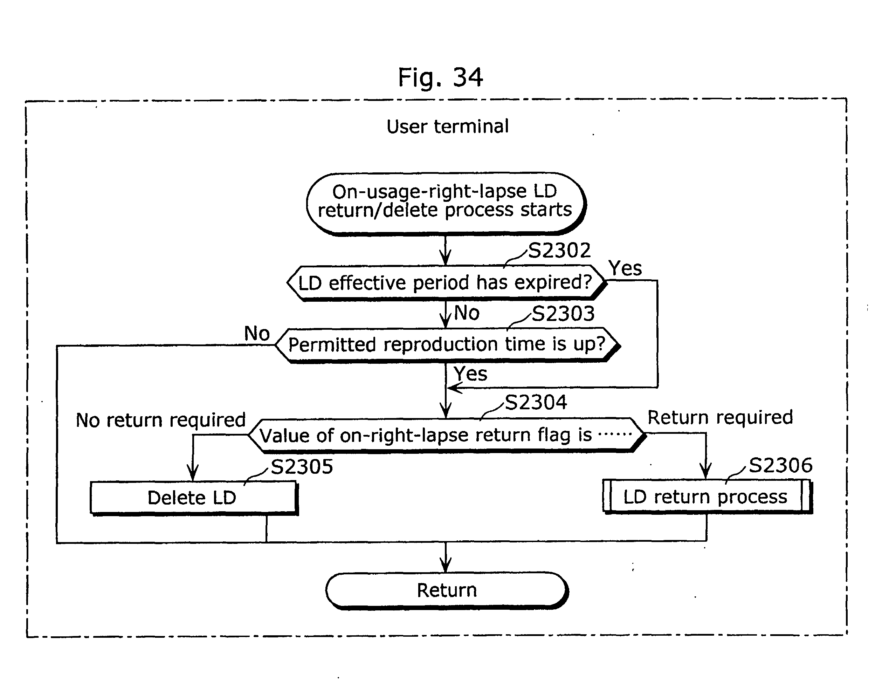

Next, the on-usage-right-lapse LD return/delete process in S2215 in Fig. 32 will be explained with reference to a flowchart in Fig. 34.

Note that this LD return/delete process is a process for judging whether LD 80b is invalid or not, and returning the LD 80b to the right management server 20b or deleting it when it is invalid.

Fig. 34 is a flowchart showing the subroutine in the on-usage-right-lapse LD return/delete process (S2215) as shown in Fig. 32.

The LD update unit 306b examines whether or not the present time has passed the end time (expiration time) of the license effective period 871, namely, the license effective period 871 has expired, with reference to the license effective period 871 in the target LD 80b (S2302).

When the present time has not yet passed the end time of the license effective period 871 (No in S2302), the LD update unit 306b judges whether the value of the original usage status 86 in the target LD 80b has reached the value of the permitted reproduction time 872 or not (S2303). The LD 80b can still be used when the value of the original usage status 86 has not yet reached the permitted reproduction time as a result of the judgment (No in S2303), so the LD return unit 305b ends the LD return/delete process without returning or deleting the LD 80b.

On the other hand, when the present time has passed the end time of the license effective period 871 (Yes in S2302) and when the value of the original usage status 86 has reached the permitted reproduction time (Yes in S2303), the LD 80b cannot be used. So, the return flag judgment unit 307b judges whether the LD 80b needs to be returned to the right management server 20b or not with reference to the value of the on-right-lapse return flag 845 of the LD 80b (S2304). When the value of the on-right-lapse return flag 845 is "No return required", the LD update unit 306b deletes the LD 80b from the LD database 302b (S2305), and returns to the main routine.

On the other hand, either when the value of the on-usage-end return flag 844 is "Return required" or when the value of the on-right-lapse return flag is "Return required", the LD update unit 306b executes the LD return process of returning the LD 80b to the right management server 20b, and returns to the main routine.

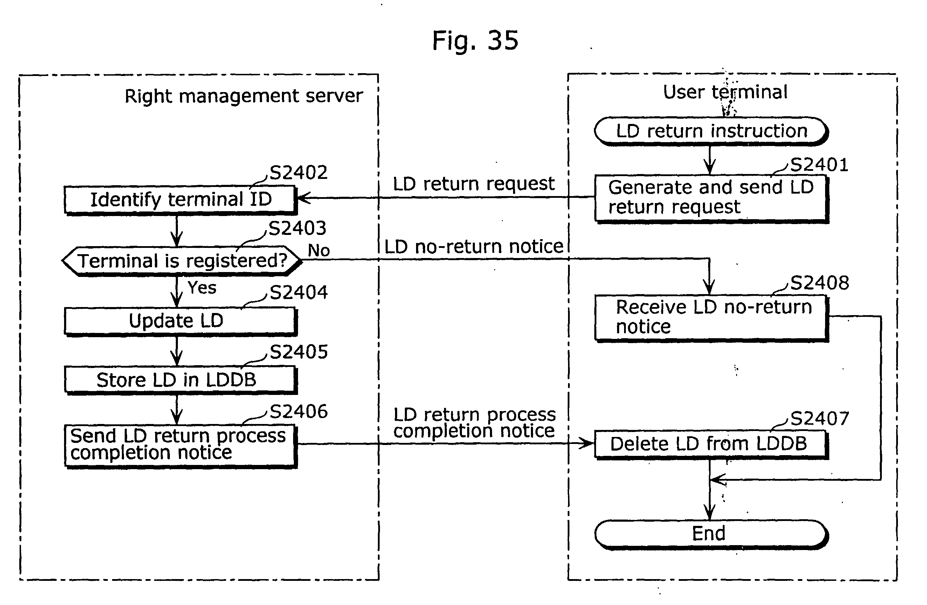

Next, the LD return process of returning LD 80b from the user terminal 30b to the right management server 20b in the digital content distribution system 1b of the second embodiment will be explained with reference to a flowchart in Fig. 35.

Fig. 35 is a flowchart showing the operation in the LD return process.

When the user β clicks a "Return LD" button 55b on a menu screen as shown in Fig. 28, for example, and selects one LD 80b which he wants to return from among the LD 80b stored in the LD database 302b displayed in a list form on the LD return menu screen not shown here which is activated by the click, the LD return instruction including the terminal ID is inputted into the LD return unit 305b via the GUI 313, and thus this LD return instruction is executed.

Upon receipt of the LD return instruction from the user β via the GUI 313, the LD return unit 305b generates the LD return request 90b, and sends the generated LD return request 90b to the right management server 20b via the communication unit 312 (S2401).

Here, a terminal ID held by the terminal ID/terminal capability storage unit 303b is set for the terminal ID 92 of the LD return request 90b generated by the LD return unit 305b, and LD identified according to the LD return instruction from the user β is set for the LD 93b, respectively.

Note that when sending the LD issue request 70b, the communication unit 312 of the user terminal 30b and the communication unit 28 of the right management server 20b establish an SAC.

Upon receipt of the LD return request 90b, the user identification unit 23 of the right management server 20b identifies the terminal ID included in the LD return request 90b (S2402).

After identifying the terminal ID, the user identification unit 23 judges whether the identified terminal ID is stored in the user information database 21 or not, with reference to the user information database 21 (S2403).

When the terminal ID included in the LD return request 90b is not stored in the user information database 21 (No in S2403), the user identification unit 23 considers the user β as an unauthorized user for this digital content distribution system 1b and notifies the user terminal 30b that the LD cannot be returned.

When the terminal ID 92 included in the LD return request 90b is stored in the user information database 21 (Yes in S2403), the user identification unit 23 acquires the user ID associated with the identified terminal ID and passes the user ID to the LD update unit 27b.

Upon receipt of the user ID, the LD update unit 27b updates the license data included in the LD return request 90b (S2404).

This update is executed in the following manner, for example. The LD analysis unit 26b analyzes the LD included in the LD return request 90b, and acquires a part necessary for the license data 222b managed in the license data database 22b, namely, the license ID, the content ID, the content decryption key, the original usage rule and the original usage status, from the LD return request 90b first, and then acquires the terminal usage status from the LD return request 90b in order to examine how the content was used on the user terminal 30b. After acquiring the terminal usage status, the LD update unit 27b increments the value of the original usage status acquired by the LD analysis unit 26b by the value of the terminal usage status so as to update it into the incremented value.

After updating the license data, the LD update unit 27b stores the updated license data in the license data database 22b (S2405). This storage is made by referring to the license data database 22b, searching a record including the user ID passed from the user identification unit 23, and storing the updated license data in the record including the searched user ID.

After storing the license data in the license data database 22b, the LD update unit 27b sends the LD return process completion notice to the user terminal 30b via the communication unit 28 (S2406).

Upon receipt of the LD return process completion notice via the communication unit 312, the LD return unit 305b of the user terminal 30b deletes the LD 80b to be deleted from the LD database 302b (S2407). Then, the LD return unit 305b notifies the user β via the GUI 313 that return of the LD 80b is completed, and ends the processing.

On the other hand, upon receipt of the LD no-return notice via the communication unit 312 (S2408), the LD return unit 305b notifies the user β via the GUI 313 that the LD 80b cannot be returned, and ends the processing without deleting the LD 80b to be returned from the LD database 302b.

As described above, according to the second embodiment, not only the load on a user's terminal apparatus can be reduced, but also accesses to a server apparatus by returns of license information and issue requests of license information can be controlled, and thus demand for various types of services for content usage can be satisfied, such as content usage control based on various rules and usage results (for example, the details of license data which is to be reissued after returned are changed depending on various rules and usage statuses such as "answered a questionnaire" and "used Δ times within X days") and collection of usage results. Furthermore, the load on the server apparatus can be reduced during license data issue.

In addition, according to the second embodiment, versatile expansion of content rules can be realized by generating license data on a server apparatus and introducing two types of usage rules, namely, an original usage rule and a terminal usage rule. In other words, even an indefinable and complicated usage rule can be introduced if it is set as an original usage rule for a terminal apparatus. In this case, when issuing license data, the terminal apparatus generates a definable and simple usage rule based on the complicated usage rule of the license data, and the server apparatus sets the generated usage rule as a terminal usage rule.

Note that in the digital content distribution system 1b of the second embodiment, the case where the original usage rule 2224b or the like is under the time management has been explained, but it goes without saying that LD can be applied to the case where the original usage rule 2224b or the like is under the management on the basis of the number of uses.

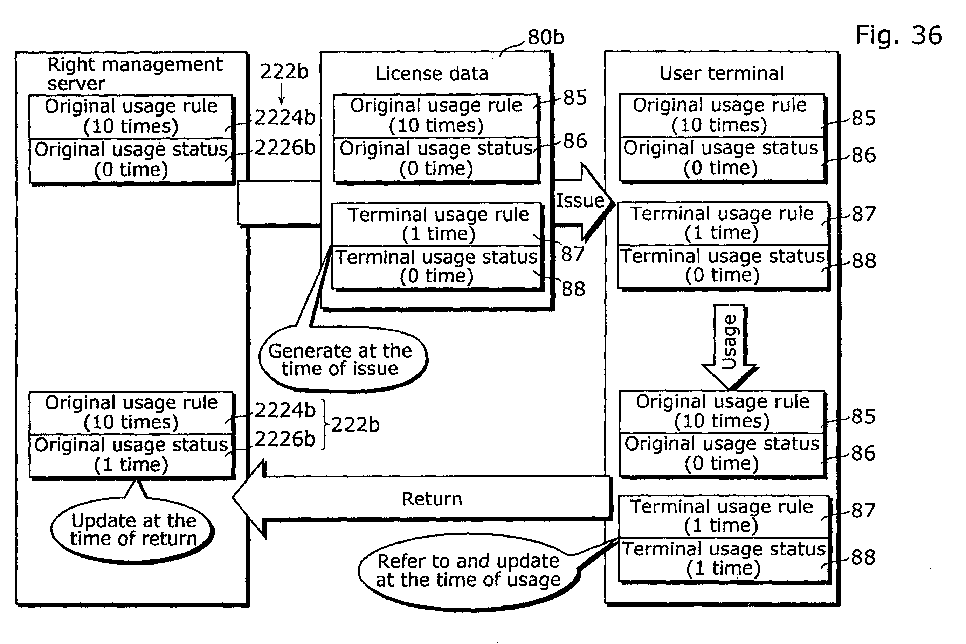

More specifically, as shown in Fig. 36, the right management server 20b in the digital content distribution system 1b holds, as license data purchased by a user, an original usage rule 2224b (10 times, for instance) and an original usage status 2226b indicating the usage status on the user terminal 30b. Upon receipt of the LD issue request 70b from the user terminal 30b, the right management server 20b cuts out the whole of the original usage rule 2224b and the original usage status 2226b for LD 80b to be issued to the user terminal 30b which has sent this LD issue request 70b, so as to delete the original usage rule 2224b and the original usage status 2226b from the license data database 22b temporarily. The right management server 20b generates a terminal usage rule 87 (1 time, for instance) and a terminal usage status 88 (0 time, for instance) based on a predetermined rule when issuing the LD 80b, and embeds them onto the LD 80b for its issue. In other words, the LD 80b is issued using a double-layer structure, with the original usage rule 85 and the original usage status 86, and the terminal usage rule 87 and the terminal usage status 88.

The user terminal 30b updates the details of the terminal usage status 88 by the amount of actual usage on the terminal indicated by the usage status, with reference only to the terminal usage rule 87 and the terminal usage status 88 of the LD 80b received from the right management server 20b when reproducing a content. Note that the user terminal 30b never refers to the original usage rule 85 and the original usage status 86. Then, the user terminal 30b sends the LD 80b having a double-layer structure to the right management server 20b using a LD return request 90b.

Upon receipt of the LD return request 90b, the right management server 20b updates the original usage status by the amount of actual usage on the terminal indicated by the usage status, with reference to the terminal usage status 88 of the LD 80b, and stores again the original usage rule 2224b and the original usage status 2226b in the license data database under the management of the right management server 20b. Note that the remaining usage rule is obtained by subtracting the original usage status from the original usage rule.

In the second embodiment, the user terminal 30b is structured so as to return LD 80b to the right management server 20b without reference to the original usage rule 85 and the original usage status 86 of the LD 80b, if at least one of the on-usage-end return flag 844 and the on-right-lapse return flag 845 of the license header 84 is "Return required". However, it may be structured so as to return the LD 80b to the right management server 20b with reference to the original usage rule 85 and the original usage status 86 as an alternative to at least one of the removed on-usage-end return flag 844 and on-right-lapse return flag 845 of the license data 84, if the LD 80b has a double-layer structure. Also, it may be structured so as to return the LD 80b to the right management server 20b with reference to the original usage rule 85 and the original usage rule 86 as an alternative to at least of one of the removed on-usage-end return flag 844 and the on-right-lapse return flag 845 of the license header 84, if the LD 80b has a double-layer structure and the maximum of the remaining usage rule calculated based on the original usage rule 2224b and the original usage status 2226b is not included in the terminal usage rule.

The rule table 22c has been explained as a rule for defining a license effective period, permitted reproduction time (permitted number of reproductions) and an on-usage-end return flag which are to be set for a terminal usage rule, but this is just an example. Various rules are conceivable for the rules defined on the rule table 22c, including, for example, a rule defined based on whether there is an intention of examining an on-right-lapse return flag and a terminal usage status and a rule for changing the setting of the terminal usage rule and various flags for each user.

In addition, in the second embodiment, the license data database 22b and the rule table 22c are formed separately, but these two tables may be structured as one table.

Furthermore, it has been explained that, in the digital content distribution system 1b of the second embodiment, upon receipt of the LD issue request 70b from the user terminal 30b, the right management server 20b issues LD 80b having a double-layer structure including the original usage rule 2224b and the original usage status 2226b to the user terminal 30b and deletes the original usage rule 2224b and the original usage status 2226b from the license data database 22b temporarily. However, without deleting the original usage rule 2224b and the original usage status 2226b from the license data database 22b, it may issue the LD 80b which does not include the original usage rule 2224b and the original usage status 2226b.

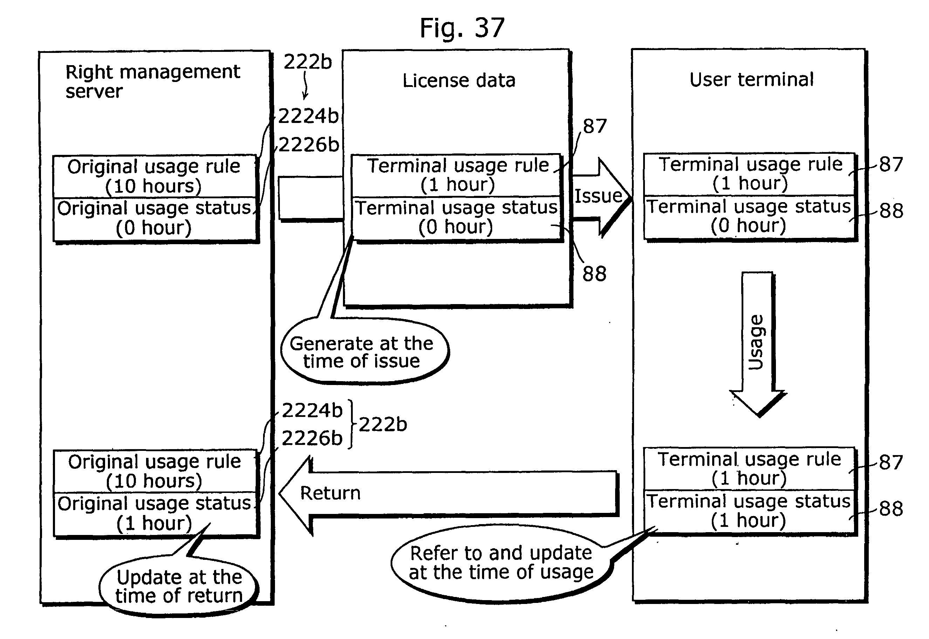

More specifically, as shown in Fig. 37, the right management server 20b in the digital content distribution system 1b holds, as license data purchased by a user, an original usage rule 2224b (10 hours, for instance) and an original usage status 2226b indicating the usage status on the user terminal 30b. Upon receipt of the LD issue request 70b from the user terminal 30b, the right management server 20b cuts out a terminal usage rule 87 (1 hour, for instance) and a terminal usage status 88 (0 time, for instance) from the original usage rule 2224b and the original usage status 2226b based on a predetermined rule for the user terminal 30b which has sent this LD issue request 70b, and embeds them on the LD 80b for its issue.

The user terminal 30b updates the details of the terminal usage status 88 by the usage of actual usage on the terminal indicated by the usage status, with reference to the terminal usage rule 87 and the terminal usage status 88 of the LD 80b received from the right management server 20b when reproducing a content. Then, the user terminal 30b sends the LD 80b to the right management server 20b using a LD return request 90b.

Upon receipt of the LD return request 90b, the right management server 20b updates the original usage status stored in the license data database under the management of the right management server 20b by the amount of actual usage on the terminal indicated by the usage status, with reference to the terminal usage status 88 of the LD 80b.

Also, in order to execute efficiently the operation of the user terminal 30b for returning LD to the right management server 20b temporarily and then acquiring the LD again (the operation from the LD return process (S2232) to S2202 in Fig. 32 or the like), information indicating whether new LD can be issued or not may be included in the LD return process completion notice sent from the right management server 20b to the user terminal 30b in Step 52406 in Fig. 35. In this case, when the user terminal 30b is notified by the LD return process completion notice that new LD can be issued, it continues the processing of acquiring LD, but when it is notified that new LD cannot be issued, it does not execute the processing of acquiring new LD.

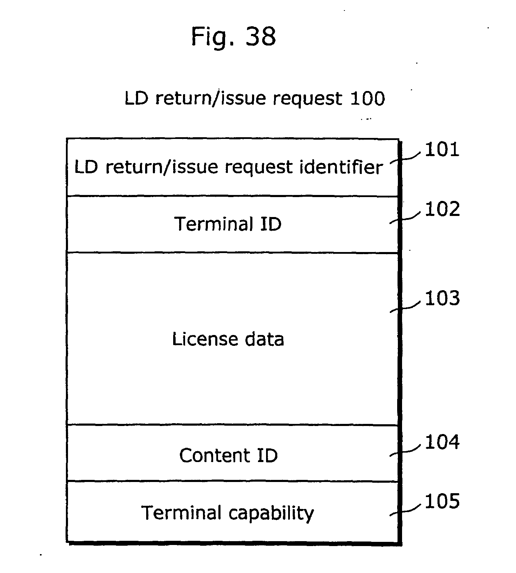

Furthermore, the second embodiment may be structured so that return of LD and the following processing of acquiring LD are performed all at once. As shown in Fig. 38, in this case, it is assumed that the user terminal 30b sends a LD return/issue request 100 for requesting to perform the LD return process and the LD acquire process all at once to the right management server 20b, and upon receipt of the LD return/issue request 100, the right management server 20b performs the LD return process (process in S2402∼S2405 in Fig. 35) and then goes on to perform the LD issue process (process in S2004∼S2007 in Fig. 27). Note that this LD return/issue request 100 is realized by a structure of a combination of a LD issue request 70b and a license data return request 90b as well as a LD return/issue request identifier 101 indicating the LD return/issue request, namely, a terminal ID 102, license data 103, a content ID 104 and a terminal capability 105.

Also, LD is usually sent from the right management server 20b to the user terminal 30b as a response to the LD return/issue request, but the whole LD does not always need to be sent back, and only minimal and essential information for the user terminal 30b to hold new LD may be sent back.

For example, when the terminal usage rule of the LD to be sent back is same as the terminal usage rule of the LD to be returned from the user terminal 30b, information instructing to reset the terminal usage status of the LD to be returned from the user terminal 30b to "0" may be sent back. In this case, the user terminal 30b does not delete the LD to be returned, but instead resets the terminal usage status of that LD to "0" and holds it as it is.

Only a terminal usage rule may be sent as a response to a LD return/issue request. In this case, it is assumed that the user terminal 30b overwrites the terminal usage rule of the LD to be returned with the terminal usage rule which has been sent back, resets the terminal usage status to "0", and holds it as it is.

Note that it has been explained on the assumption that license data itself is described in the LD return request 90b and the LD return/issue request 100, but the whole license data does not always need to be described but only a minimal and essential part thereof, such as the terminal usage status only, for the right management server 20b to return the LD may be described.

Up to now, it has been explained on the assumption that the user terminal 30b once returns the LD whose usage right has lapsed to the right management server 20b and then acquires new LD, but it may be structured so as to acquire the LD again from the right management server 20b without returning the LD. In this case, upon receipt of the LD re-acquire request from the user terminal 30b, the right management server 20b performs the processing considering that the usage of the previously issued LD has been completed, and issues new LD. Note that in this case, it is preferable for the user terminal 30b to control so that a LD re-acquire request is made only when the usage right of the LD has lapsed, in order to avoid holding two LD with the same license ID at the same time.

Also, in the second embodiment, it has been explained on the assumption that the on-right-lapse return flag is information indicating whether LD needs to be returned to the right management server 20b or not when the right of the LD has lapsed. However, the present invention is not limited to that, and the on-right-lapse return flag may be used as a flag indicating whether the usage rule remains or not which is calculated from the original usage rule and the original usage status, whether LD can be acquired again from the right management server 20b or not, whether LD can be deleted or not on the user terminal 30b, and the like, and the user terminal 30b may be something to determine the next operation according to the information identified by the flag.

Furthermore, in the second embodiment, the cumulative usage time and the number of uses are only stored in the terminal usage status, but information involving the usage status such as the content reproduction start time and the content reproduction end time may be embedded into the terminal usage status so as to be returned to the server. As a result, the server can acquire specific and detailed usage status of each user such as a content usage time zone, and thus meet demand for various types of services for content usage.

### Industrial Applicability

The content usage management system and the digital content distribution system according to the present invention includes a server apparatus and a terminal apparatus, and the server apparatus is suitable for use as a computer apparatus which distributes license information for each content and the terminal apparatus is suitable for use as a computer apparatus which receives license information, such as a set top box, a personal computer, a digital television, a printer, a mobile phone and a mobile information terminal.

## Claims

1. A content usage management system comprising:
a terminal apparatus for using a content that is a digital work; and
a server apparatus for managing usage of the content on the terminal apparatus,
wherein the server apparatus includes:
a license information storage unit operable to store license information indicating a usage rule of a content for each user who uses the terminal apparatus;
a license ticket generation unit operable to generate a license ticket based on a request from the user and send said license ticket to the terminal apparatus, the license ticket being information on a right indicating a part or a whole of the usage rule indicated by the license information associated with the user; and
a return information setting unit operable to set return information on the license ticket generated by the license ticket generation unit, the return information indicating whether the license ticket needs to be returned to the server apparatus or not when the right of said license ticket lapses, and
the terminal apparatus includes:
a usage request unit operable to request the server apparatus for usage of the content according to the user's instruction;
a receiving unit operable to receive the license ticket sent from the server apparatus;
a content usage control unit operable to control the usage of the content under the usage rule indicated by the received license ticket; and
a license ticket return unit operable to attempt to return the license ticket to the server apparatus according to the return information indicated by the received license ticket.

2. The content usage management system according to Claim 1,
wherein the usage request unit requests the server apparatus for the usage of the content by sending an instructed usage amount of the content to the server apparatus, and
the license ticket generation unit generates the license ticket based on the instructed usage amount sent from the usage request unit and sends said license ticket to the terminal apparatus.

3. The content usage management system according to Claim 2,
wherein the instructed usage amount includes a number of usage times of the content.

4. The content usage management system according to Claim 2,
wherein the instructed usage amount includes cumulative usage time of the content.

5. The content usage management system according to Claim 1,
wherein the usage rule indicated by the license ticket includes an effective period of said license ticket, the effective period being set as a part or a whole of an effective period defined under the usage rule indicated by the license information.

6. The content usage management system according to Claim 1,
wherein the usage request unit sends capability information and the instructed usage amount to the server apparatus, the capability information indicating capability of the terminal apparatus to control the usage of the content, and
the license ticket generation unit generates the license ticket based on the capability information sent from the usage request unit and sends said license ticket to the terminal apparatus.

7. The content usage management system according to Claim 6,
wherein the capability information includes information indicating whether the terminal apparatus has a secure clock or not.

8. The content usage management system according to Claim 6,
wherein the capability information includes information indicating whether the terminal apparatus has a unit for writing onto a secure recording medium or not.

9. The content usage management system according to Claim 6,
wherein upon receipt of the capability information from the usage request unit, the license ticket generation unit includes license ticket status information into the license ticket and sends said license ticket to the terminal apparatus, the license ticket status information instructing how to handle the license ticket on the terminal apparatus depending on the capability indicated by the capability information.

10. The content usage management system according to Claim 9,
wherein the license ticket status information includes a flag indicating that the license ticket must be consumed immediately without being written onto a recording medium.

11. A terminal apparatus in a content usage management system comprising the terminal apparatus for using a content that is a digital work and a server apparatus for managing usage of the content on the terminal apparatus,
wherein the server apparatus includes:
a license information storage unit operable to store license information indicating a usage rule of a content for each user who uses the terminal apparatus;
a license ticket generation unit operable to generate a license ticket based on a request from the user and send said license ticket to the terminal apparatus, the license ticket being information on a right indicating a part or a whole of the usage rule indicated by the license information associated with the user; and
a return information setting unit operable to set return information on the license ticket generated by the license ticket generation unit, the return information indicating whether the license ticket needs to be returned to the server apparatus or not when the right of said license ticket lapses, and
the terminal apparatus includes:
a usage request unit operable to request the server apparatus for usage of the content according to the user's instruction;
a receiving unit operable to receive the license ticket sent from the server apparatus;
a content usage control unit operable to control the usage of the content under the usage rule indicated by the received license ticket; and
a license ticket return unit operable to attempt to return the license ticket to the server apparatus according to the return information indicated by the received license ticket.

12. A program for a terminal apparatus in a content usage management system comprising the terminal apparatus for using a content that is a digital work and a server apparatus for managing usage of the content on the terminal apparatus,
wherein the server apparatus includes:
a license information storage unit operable to store license information indicating a usage rule of a content for each user who uses the terminal apparatus;
a license ticket generation unit operable to generate a license ticket based on a request from the user and send said license ticket to the terminal apparatus, the license ticket being information on a right indicating a part or a whole of the usage rule indicated by the license information associated with the user; and
a return information setting unit operable to set return information on the license ticket generated by the license ticket generation unit, the return information indicating whether the license ticket needs to be returned to the server apparatus or not when the right of said license ticket lapses, and
the program causes a computer to function as:
a usage request unit operable to request the server apparatus for usage of the content according to the user's instruction;
a receiving unit operable to receive the license ticket sent from the server apparatus;
a content usage control unit operable to control the usage of the content under the usage rule indicated by the received license ticket; and
a license ticket return unit operable to attempt to return the license ticket to the server apparatus according to the return information indicated by the received license ticket.

13. A server apparatus in a content usage management system comprising a terminal apparatus for using a content that is a digital work and the server apparatus for managing usage of the content on the terminal apparatus,
wherein the server apparatus includes:
a license information storage unit operable to store license information indicating a usage rule of a content for each user who uses the terminal apparatus;
a license ticket generation unit operable to generate a license ticket based on a request from the user and send said license ticket to the terminal apparatus, the license ticket being information on a right indicating a part or a whole of the usage rule indicated by the license information associated with the user; and
a return information setting unit operable to set return information on the license ticket generated by the license ticket generation unit, the return information indicating whether the license ticket needs to be returned to the server apparatus or not when the right of said license ticket lapses, and
the terminal apparatus includes:
a usage request unit operable to request the server apparatus for usage of the content according to the user's instruction;
a receiving unit operable to receive the license ticket sent from the server apparatus;
a content usage control unit operable to control the usage of the content under the usage rule indicated by the received license ticket; and
a license ticket return unit operable to attempt to return the license ticket to the server apparatus according to the return information indicated by the received license ticket.

14. A program for a server apparatus in a content usage management system comprising a terminal apparatus for using a content that is a digital work and the server apparatus for managing usage of the content on the terminal apparatus, the program causing a computer to function as:
a license ticket generation unit operable to generate a license ticket from license information based on a request from each user and send said license ticket to the terminal apparatus, the license information indicating a usage rule of a content for the user who uses the terminal apparatus and being stored in a license information storage unit, and the license ticket being information on a right indicating a part or a whole of the usage rule indicated by the license information associated with the user; and
a return information setting unit operable to set return information on the license ticket generated by the license ticket generation unit, the return information indicating whether the license ticket needs to be returned to the server apparatus or not when the right of said license ticket lapses,
wherein the terminal apparatus includes:
a usage request unit operable to request the server apparatus for usage of the content according to the user's instruction;
a receiving unit operable to receive the license ticket sent from the server apparatus;
a content usage control unit operable to control the usage of the content under the usage rule indicated by the received license ticket; and
a license ticket return unit operable to attempt to return the license ticket to the server apparatus according to the return information indicated by the received license ticket.

15. A content usage management method in a system comprising a terminal apparatus for using a content that is a digital work and a server apparatus for managing usage of the content on the terminal apparatus, the content usage management method including:
a step (A) executed in the server apparatus; and
a step (B) executed in the terminal apparatus,
wherein the step (A) includes:
a storage step of storing license information in a license information storage unit, the license information indicating a usage rule of a content for each user who uses the terminal apparatus;
a license ticket generation step of generating a license ticket based on a request from the user and sending said license ticket to the terminal apparatus, the license ticket being information on a right indicating a part or a whole of the usage rule indicated by the license information associated with the user; and
a return information setting step of setting return information on the license ticket generated in the license ticket generation step, the return information indicating whether the license ticket needs to be returned to the server apparatus or not when the right of said license ticket lapses, and
the step (B) includes:
a usage request step of requesting the server apparatus for usage of the content according to the user's instruction;
a receiving step of receiving the license ticket sent from the server apparatus;
a content usage control step of controlling the usage of the content under the usage rule indicated by the received license ticket; and
a license ticket return step of attempting to return the license ticket to the server apparatus according to the return information indicated by the received license ticket.
